# EUROPEAN PATENT APPLICATION

(11) **EP 4 317 936 A1**
(43) Date of publication of application: **07.02.2024**
(21) Application number: 22780710.4
(22) Date of filing: 28.03.2022
(51) Int. Cl.: G01M 99/00, G05B 23/02, G06Q 10/00

(54) **MACHINE STATE DETECTING DEVICE**

(30) Priority: 02.04.2021 JP 2021063255
(71) Applicant: Hitachi Construction Machinery Co., Ltd., Tokyo 110-0015 (JP)
(72) Inventor: UNUMA, Munetoshi, Tokyo 100-8280 (JP); TSUKUI, Hiroshi, Tokyo 110-0015 (JP); AJIMA, Kenichi, Tokyo 110-0015 (JP); EJIRI, Kouichirou, Tokyo 110-0015 (JP); HONDA, Mitsuhiko, Tokyo 110-0015 (JP)
(74) Representative: MERH-IP Matias Erny Reichl Hoffmann Patentanwälte PartG mbB
(86) International application number: PCT/JP2022/014895
(87) International publication number: WO 2022/210499

(57) **Abstract**

Provided is a machine state detecting device capable of easily detecting the state of a machine, regardless of whether an unknown operation that is not expected to cause damage is performed. A state detecting device 100 includes a collection device 1a that collects, at a plurality of times, state information 1f indicating the state of the machine that changes chronologically, and an arithmetic processing device 1b that processes a plurality of pieces of the state information 1f collected at the plurality of times to detect the state of the machine. The arithmetic processing device 1b includes: a classification process section 1i that classifies a feature amount vector having the type of the state information 1f as a feature amount into any of a plurality of clusters, and provides a classification ID; a detection process section 1j that detects a damage the machine received, based on state information 1g indicating the state of the machine that changes chronologically; and a tying process section 1l that ties an interval in which the damage was detected by the detection process section 1j to the classification ID provided in the interval by the classification process section 1i.

## Description

### Technical Field

The present invention relates to a device that detects the state of a machine.

### Background Art

The relevant art in the present technical field includes Patent Literature 1, Patent Literature 2, and Patent Literature 3 indicated below. In Patent Literature 1, a device is described that learns the operational tendency of a machine when an anomaly occurred in the machine. In Patent Literature 2, a detection device is described that detects an interval on the time axis in which stress applied to a machine occurred, or an interval at the position in which the machine was present. In Patent Literature 3, a damage estimation device is described that estimates the damage amount received by a machine, from the result of recognizing the operation performed by the machine.

### Citation List

### Patent Literature

Patent Literature 1: JP 2018-97616 A
Patent Literature 2: JP 6215446
Patent Literature 3: JP 6458055

### Summary of Invention

### Technical Problem

The techniques described in Patent Literatures 1 to 3 noted above have problems, such as follows.
(a) In Patent Literature 1, there is no discussion of means for determining whether the operation of the machine when an anomaly occurred is a known operation or an unknown operation, nor is there discussion of output methods. Further, because the operational tendency of the machine is learned using an alarm or the like that indicates an anomaly in the machine, there is also no discussion of detection of damage (cause of an anomaly) received by the machine before an alarm indicating the anomaly is issued.
(b) In Patent Literature 2, the interval in which damage (repeated stress) occurred before an anomaly (machine rupture) is caused is detected, and the cause of the reception of the damage is identified using a position/state recognition means. However, the position/state recognition means used here is for recognizing states that are preset, and it is not discussed what process will be performed if a state that is not set occurs.
(c) In Patent Literature 3, a table is created in which operation recognition results and the damage amounts that the machine will receive when the operations are performed are tied to each other in advance. Then, in operation, the operation performed by the machine is recognized according to an operation recognition technique, and, based on the recognition result, the damage amount corresponding to the operation is referenced to estimate the damage amount. However, the operation recognition technique used here recognizes operations that are preset, as in the case of (b) above, and it is not discussed what process will be performed if an operation that is not set is performed.

The present invention has been made in view of the foregoing, and aims to provide a machine state detecting device that can easily detect the state of a machine, regardless of whether an unknown operation that is not expected to cause damage is performed.

### Solution to Problem

In order to solve the problem, a machine state detecting device of the present invention includes a collection device that collects, at a plurality of times, state information indicating a state of a machine that changes chronologically, and an arithmetic processing device that detects the state of the machine by processing a plurality of pieces of the state information collected at the plurality of times. The arithmetic processing device includes: a classification process section that identifies a plurality of feature amount vectors having a type of the state information as a feature amount by temporally dividing the plurality of pieces of the state information collected by the collection device, classifies the identified feature amount vectors into any of a plurality of prescribed sets, and, to the feature amount vectors that have been classified, provides a classification ID identifying the set to which the feature amount vectors belong; a detection process section that detects a damage received by the machine based on the state information, collected by the collection device, indicating the state of the machine that chronologically changes; and a tying process section that ties an interval in which the damage was detected by the detection process section to the classification ID provided in the interval by the classification process section.

### Advantageous Effects of Invention

According to the present invention, the state of a machine can be easily detected, regardless of whether an unknown operation that is not expected to cause damage is performed.

Other problems, components, and effects will become apparent from the following description of embodiments.

### Brief Description of Drawings

Fig. 1 is a processing block diagram of a state detecting device of Embodiment 1.
Fig. 2 is a processing flow diagram of the state detecting device.
Fig. 3 is an illustrative diagram of repeated stress amplitude and wavelength.
Fig. 4 is an example of information recorded in a classification model database.
Fig. 5 is an example of state classification sensor/control information.
Fig. 6 is an example of the processing result of a classification process.
Fig. 7 is an illustrative diagram of classification ID patterns.
Fig. 8 is an example (No. 1) of information recorded in a damage state classification ID database.
Fig. 9 is another example of cutting-out of a damage interval.
Fig. 10 is an example (No. 2) of the information recorded in the damage state classification ID database.
Fig. 11 is an example (No. 3) of the information recorded in the damage state classification ID database.
Fig. 12 is a processing block diagram of the state detecting device of Embodiment 2.
Fig. 13 is an illustrative diagram of a classification ID cluster distribution.
Fig. 14 is a processing block diagram of the state detecting device of Embodiment 3.
Fig. 15 is an example (No. 4) of the information recorded in the damage state classification ID database.
Fig. 16 is an illustrative diagram of keyframe animation.
Fig. 17 is an example (No. 5) of the information recorded in the damage state classification ID database.
Fig. 18 is a processing block diagram of the state detecting device of Embodiment 4.
Fig. 19 is a processing block diagram of the state detecting device of Embodiment 5.
Fig. 20 is an example of cumulative damage levels.
Fig. 21 is an example of chronological changes in cumulative damage level.
Fig. 22 is an example of visualization, performed in the state detecting device of Embodiment 6, of integrated values of individual damage amounts.
Fig. 23 is an example of visualization of the number of occurrences of the damage state.
Fig. 24 is an example (No. 1) of a display screen in the state detecting device of Embodiment 7.
Fig. 25 is an example (No. 2) of the display screen.
Fig. 26 is an example (No. 3) of the display screen.

### Description of Embodiments

In the following, embodiments of the present invention will be described with reference to the drawings. The components in the embodiments that are denoted by the same reference signs have similar functions throughout the embodiments unless specifically noted, and descriptions thereof may be omitted.

### [Embodiment 1]

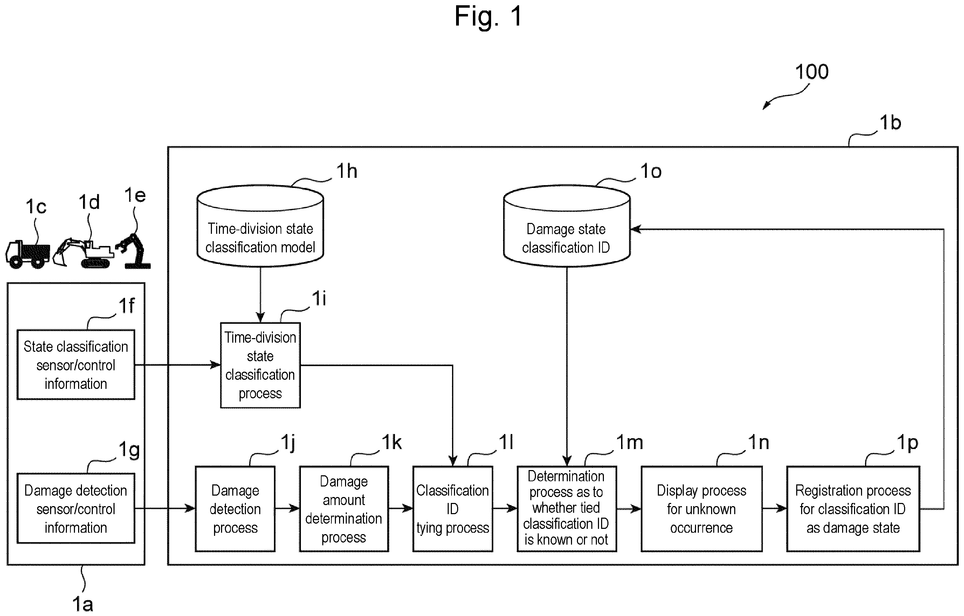

With reference to Fig. 1 to Fig. 11, a state detecting device 100 of Embodiment 1 will be described.

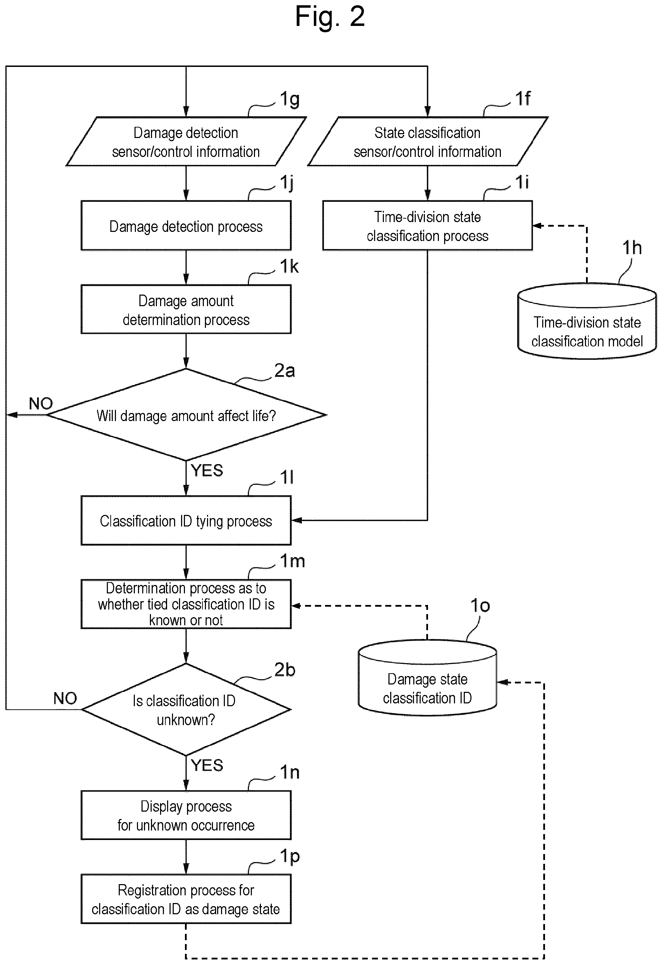

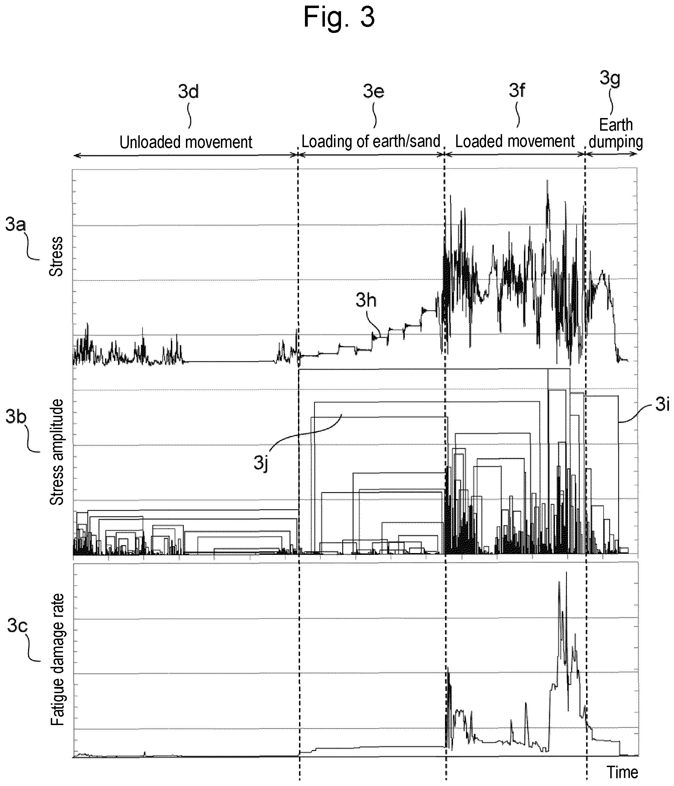

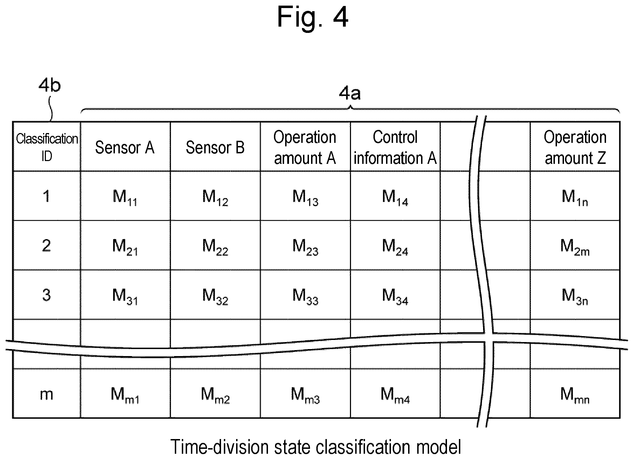

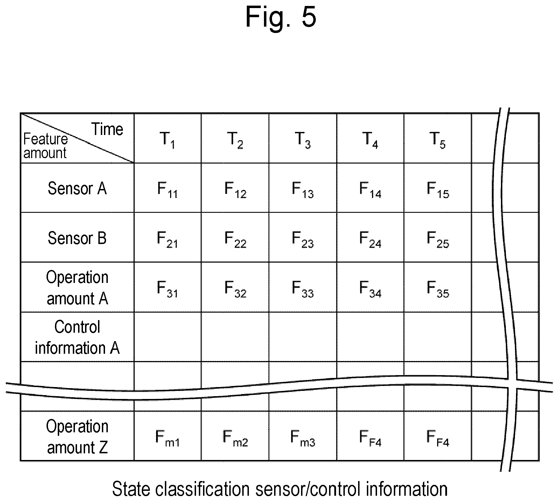

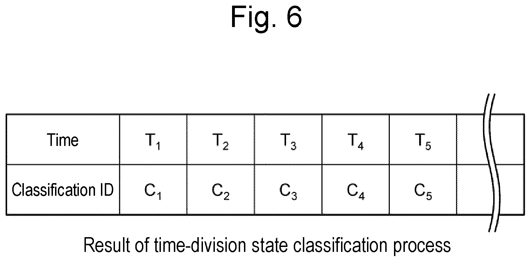

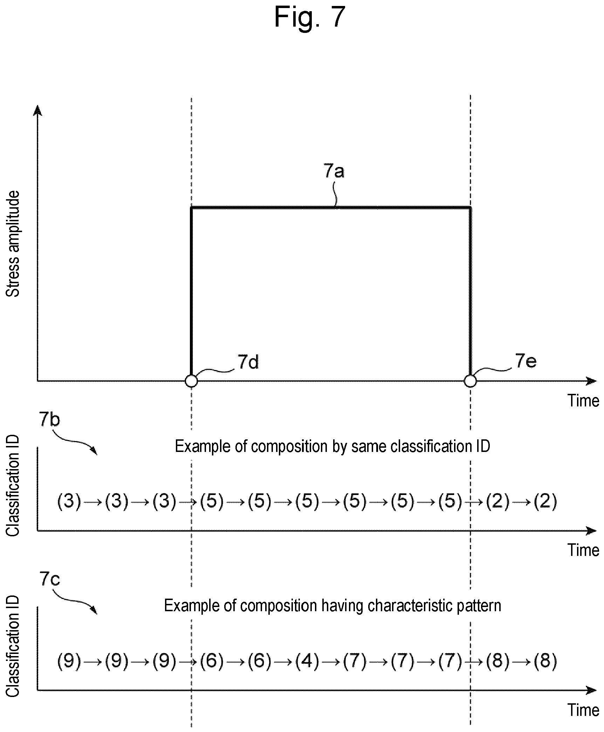

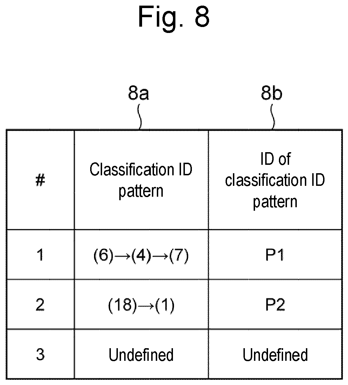

Fig. 1 is a processing block diagram of the state detecting device 100 of Embodiment 1. Fig. 2 is a processing flow diagram of the state detecting device 100. Fig. 3 is an illustrative diagram of repeated stress amplitude and wavelength. Fig. 4 illustrates an example of information recorded in a classification model database 1h. Fig. 5 illustrates an example of state classification sensor/control information 1f. Fig. 6 illustrates an example of the processing result of a classification process 1i. Fig. 7 is an illustrative diagram of classification ID patterns. Fig. 8 illustrates an example (No. 1) of information recorded in a damage state classification ID database 1o.

The state detecting device 100 is a device that detects the state of various machines, typically work machines such as construction machines or industrial robots. In particular, the state detecting device 100 is a device that detects the state of a machine (for example, the operation state of a machine) that changes chronologically. In Fig. 1, 1c, 1d, and 1e each designate an example machine to which the state detecting device 100 is applied. 1c designates a hauling vehicle, such as a dump truck. 1d designates a vehicle-based construction machine, such as an excavator. 1e designates an industrial robot that may be utilized in a manufacturing plant or the like. These are not limitations, and the state detecting device 100 may be applied to various machines.

The state detecting device 100 can be largely divided into a collection device 1a that collects information for detecting the state of the machine, and an arithmetic processing device 1b that performs a process for detecting the state of the machine using the collected information. That is, the state detecting device 100 is provided with: the collection device 1a that collects, at a plurality of times, state information indicating the state of the machine that changes chronologically; and the arithmetic processing device 1b that processes a plurality of pieces of the state information collected at the plurality of times to detect the state of the machine.

The collection device 1a is made up of a device provided in the machine to store various sensor information, and is constructed of a controller or the like mounted on the machine. Each of the collection device 1a and the arithmetic processing device 1b may be constructed of a general- or industrial-purpose computer, or may be constructed of dedicated hardware using a microcomputer. Each of the collection device 1a and the arithmetic processing device 1b is constructed including a CPU, a ROM, and a RAM, and achieves the respective functions as the CPU executes a program stored in the ROM. The arithmetic processing device 1b may feed the information collected by the collection device 1a to an external cloud computer using a communication line, so that processing can be performed using the cloud computer. While in Fig. 1, the collection device 1a and the arithmetic processing device 1b are separately depicted, the state detecting device 100 may be constructed as a single device with the collection device 1a and the arithmetic processing device 1b contained in a single housing.

The collection device 1a is provided with a state classification sensor/control information collection section 1f and a damage detection sensor/control information collection section 1g that respectively collect state classification sensor/control information 1f and damage detection sensor/control information 1g as state information indicating the state of the machine that changes chronologically. The state classification sensor/control information 1f include sensor measurement information that is used for classifying the state of the machine, and information for controlling the portions of the machine. The damage detection sensor/control information 1g includes sensor measurement information that is used for detecting damage the machine received, and information for controlling the portions of the machine. The state classification sensor/control information 1f and the damage detection sensor/control information 1g may be information of the same type or information of different types. In the present embodiment, the state classification sensor/control information 1f may also be referred to as "state information 1f". In the present embodiment, the damage detection sensor/control information 1g may also be referred to as "state information 1g".

The collection device 1a can collect the sensor measurement information included in the state information 1f and the state information 1g directly from a strain gauge, an angle sensor, and the like attached to the machine, or by acquiring information flowing through a network such as a Controller Area Network (CAN) mounted on the machine. The collection device 1a can acquire the control information included in the state information 1f and the state information 1g directly from a control device or the like of the machine, or by acquiring information flowing through a network mounted on the machine.

The arithmetic processing device 1b is provided with: a detection process section 1j that performs a detection process 1j for damage the machine received; a determination process section 1k that performs a determination process 1k for the damage amount the machine received; a classification process section 1i that performs a classification process 1i for classifying the state of the machine at each time based on the state information 1f collected by the collection device 1a; a tying process section 11 that performs a tying process 11 between the processing result of the detection process 1j (and the determination process 1k) and the processing result of the classification process 1i; a determination process section 1m that performs a determination process 1m as to whether a classification ID tied by the tying process 11 is an unknown classification ID; a display process section 1n that performs a display process 1n for displaying that the classification ID tied by the tying process 11 is an unknown classification ID; and a registration process section 1p that performs a registration process 1p for registering the classification ID that has been determined to be an unknown classification ID by the determination process 1m in a classification ID database 1o. Further, the arithmetic processing device 1b is provided with the classification ID database 1o for the damage state and the classification model database 1h as recording devices.

For purposes of explanation, the components of the respective sections in the collection device 1a and the arithmetic processing device 1b, and the processes in the respective sections are represented by the same reference signs.

The arithmetic processing device 1b, as described above, is provided with the function (detection process section 1j) of performing the detection process 1j for damage the machine received. The detection process section 1j performs a process of detecting damage the machine received based on the state information 1g collected by the collection device 1a. The detection process 1j detects an interval (period) on a time axis in which the damage the machine received is large. The damage of interest to the detection process 1j is, for example, a damage due to stress fatigue received by various portions of the machine, such as a hydraulic cylinder and a hydraulic motor. The damage of interest to the detection process 1j may also include, for example, other than the physical damage such as stress fatigue damage, conditions that may cause safety problems, such as a condition in which the machine's balance is poor. The condition in which the machine's balance is poor can be detected by means of an inclinometer mounted to the machine.

For the damage detection process 1j, there is a technique described in Patent Literature 2. This technique uses a stress value measured by a strain gauge attached to a dump truck to detect the start time and end time of a repeated stress. Fig. 3 illustrates an example of the detection process 1j performed using the technique. The horizontal axis of Fig. 3 shows time. The vertical axis of Fig. 3 shows stress (3a), stress amplitude (3b), and fatigue damage rate (3c) with their respective time axes aligned. In Fig. 3, 3h is a stress waveform plotting the measurement values of a strain gauge attached to a predetermined position of a machine. The fatigue damage is dependent not on the absolute value of stress but on the magnitude of the amplitude of repeated stress. In Fig. 3, 3h indicates the absolute values of stress, and does not show by itself where a large fatigue damage was received. Thus, in the detection process 1j, the amplitude of repeated stress and the wavelength of stress are detected from the stress waveform 3h, and the interval in which a large fatigue damage was received is detected. This technique is an improvement over the rainflow method, which is a kind of stress cycle counting method, and detects the wavelength of stress. In Fig. 3, 3i and 3j show the results of detection of the amplitude of repeated stress and the wavelength of stress from the stress waveform of 3h, using the technique. The rectangles of 3i and 3j indicate the detected amplitude and wavelength of the stress. The length of the rectangles of 3i and 3j along the vertical axis indicates the magnitude of the amplitude of the repeated stress. The length of the rectangles of 3i and 3j along the horizontal axis indicates the wavelength of the repeated stress. The time corresponding to the left-side vertex of the base of the rectangles of 3i and 3j indicates the start time of the repeated stress. The time corresponding to the right-side vertex of the base of the rectangles of 3i and 3j indicates the end time of the repeated stress.

An operation to load earth/sand onto a dump truck involves a flow in which: the dump truck moves in an empty-load state (3d); earth/sand is loaded multiple times onto the dump truck at rest (3e); the dump truck moves in loaded state (3f); and earth dumping is performed to discharge the loaded earth/sand (3g). In Fig. 3, 3j indicates the amplitude and wavelength of a repeated stress received by the dump truck when earth/sand is loaded onto the dump truck (3e). In Fig. 3, 3i indicates the amplitude and wavelength of a repeated stress received by the dump truck when the dump truck performs earth dumping (3g). By this technique, the detection process 1j can detect the magnitude of the damage the machine received (magnitude of the amplitude of repeated stress), and the interval in which the machine received the damage (the period from the start time to the end time of the amplitude of repeated stress). Further, in Fig. 3, 3c indicates the fatigue damage the machine receives per unit time (fatigue damage rate). The fatigue damage rate 3c is calculated by calculating, based on the amplitudes and wavelengths of repeated stress indicated by 3b, various fatigue damages received per unit time from various repeated stresses, and then integrating the fatigue damages per unit time. In this way, the detection process 1j can detect the magnitude of damage at each time.

The technique described in Patent Literature 2 is an example of the technique for detecting the magnitude of the damage the machine received and the interval in which the machine received the damage. Other techniques may be used for the detection process 1j as long as the magnitude of the damage the machine received and the interval in which the machine received the damage can be detected.

In the present embodiment, the magnitude of the damage the machine received (magnitude of the amplitude of repeated stress) may also be referred to as "damage amount". In the present embodiment, the interval on the time axis in which the machine received damage (period from the start time to the end time of damage) may also be referred to as "damage interval". In the present embodiment, the state of the machine when the machine received damage (damage interval) may also be referred to as "damage state". In the present embodiment, the damage amount the machine received in the damage interval may also be referred to as "individual damage amount".

Further, the arithmetic processing device 1b, as described above, is provided with the function of performing the determination process 1k for the damage amount the machine received (determination process section 1k). The determination process section 1k performs a process of determining whether the damage amount detected by the detection process 1j is such a damage amount that the life of the portions of the machine is affected. The determination process 1k for the damage amount determines that the damage amount is such that the life is affected if the damage amount detected by the detection process 1j is more than or equal to a predetermined threshold value, or determines that the damage amount does not affect the life if less than the threshold value. If the damage amount detected by the detection process 1j is such a damage amount that the life is not affected, a process of acquiring the state information 1g and the state information 1f is performed (corresponding to "NO" at 2a in Fig. 2). On the other hand, if the damage amount detected by the detection process 1j is such a damage amount that the life is affected, the tying process 11 is performed, as will be described below (corresponding to "YES" at 2a in Fig. 2).

The arithmetic processing device 1b may not set the threshold value in the determination process 1k, and may perform the tying process 11 at all damage amounts detected by the detection process 1j. For example, even when the damage amount is small, it may be difficult to set the threshold value for determining the damage amount that will affect the life if the number of occurrences of the damage state is large. In such a case, the arithmetic processing device 1b may perform the tying process 11 at all damage amounts detected by the detection process 1j without performing the determination process 1k.

Further, the arithmetic processing device 1b, as described above, is provided with the function (classification process section 1i) of performing the classification process 1i for classifying the state of the machine at each time, based on the state information 1f collected by the collection device 1a. The classification process section 1i performs a process of temporally dividing a plurality of pieces of the state information 1f collected by the collection device 1a at a plurality of times to identify a plurality of feature amount vectors having the type of the state information 1f as feature amounts. Then, the classification process section 1i performs a process of classifying the identified feature amount vectors into any of a plurality of prescribed sets (clusters), and providing the classified feature amount vectors with classification IDs that identify the set (cluster) to which the feature amount vectors belong.

Specifically, the classification process 1i is performed based on the information that is recorded in advance in the classification model database 1h. In the classification model database 1h, for each of various states of the machine, a feature amount vector indicating the state and classification ID identifying the feature amount vector are recorded in advance in association with each other, the feature amount vector having the items (types) of the state information 1f as the items thereof (vector components defined as feature amounts) (where, if the state classification sensor/control information has n items, the feature amount vector has n dimensions).

Fig. 4 illustrates an example of the information recorded in the classification model database 1h. In Fig. 4, 4a indicates the items of the feature amount vectors, from sensor A to operation amount Z. In Fig. 4, 4b indicates the classification ID. The classification model database 1h may be built using a clustering technique. The classification process 1i chronologically divides a plurality of pieces of the state information 1f for learning that have been collected by the collection device 1a at a plurality of times and in which various states of the machine are recorded, to identify a plurality of feature amount vectors. Then, the classification process 1i uses a clustering technique to classify the plurality of identified feature amount vectors into any of a plurality of clusters, and provides the classification IDs. As the clustering technique, a technique such as the k-means method may be used. The k-means method is a technique whereby similar feature amount vectors are sorted into a number of clusters, the number corresponding to a preset number of divisions, and a classification ID identifying each cluster is returned. In this way, the feature amount vectors of the state information 1f are classified according to the set number of divisions, and the classification IDs of the clusters to which the classified feature amount vectors belong are provided. The feature amount vectors divide representative states of the machine into a set number m of divisions and indicate the feature of each state. In the example of Fig. 4, the feature amount vector to which the classification ID "3" is provided is (M₃₁, M₃₂, ···, M₃ₙ). For the classification ID, m types of ID are present corresponding to the number of divisions. In the present embodiment, the feature amount vectors recorded in the classification model database 1h illustrated in Fig. 4 may also be referred to as the "feature amount vectors of the classification model".

The classification ID indicates one state (or scene) of the machine. For example, the classification ID in the case of a dump truck as the machine may indicate the state in which the vessel of the dump truck is raised and earth dumping is being performed, or, in the case of an excavator as the machine, may indicate the state in which the front arm is raised and excavation is being performed. Further, the state of the machine is indicated by the feature amount vector. The classification model database 1h records the feature amount vector indicating the state of the machine and the classification IDs identifying the feature amount vectors in association with each other. The classification model database 1h of Embodiment 1 does not record natural language indicating the state of the machine, such as the "state in which the vessel of the dump truck is raised and earth dumping is being performed" described above by way of example, in direct association with the classification ID.

The classification process 1i performs a process of searching the feature amount vectors recorded in the classification model database 1h for the classification ID of a feature amount vector that is the most similar to the feature amount vector of the state information 1f to be classified. Being similar means that the distance (for example, Euclidean distance) between the feature amount vectors is shorter than those between the others. The classification process 1i searches the feature amount vectors recorded in the classification model database 1h for the feature amount vector that has the closest distance to the feature amount vector to be classified, and determines that the classification ID of the feature amount vector obtained by the search is the classification ID that indicates the state of the machine at the time the state information 1f on which the feature amount vector to be classified is based was collected.

Fig. 5 illustrates an example of the state information 1f on which the feature amount vector to be classified is based. In Fig. 5, the state information 1f at "time T₃" is (F₁₃, F₂₃, ···, Fₘ₃). The (F₁₃, F₂₃, ···, Fₘ₃) constitutes the feature amount vector that has the items (types) of the state information 1f at "time T₃" as the feature amounts. In the present embodiment, the feature amount vectors of the state information 1f illustrated in Fig. 5 may also be referred to as the "feature amount vectors of the collected data".

The classification process 1i searches for the feature amount vector of the classification model that is the most similar to the feature amount vector of the collected data at each time illustrated in Fig. 5, and acquires the classification ID of the feature amount vector of the classification model obtained by the search. In the process of a search for the similar feature amount vector, as the similarity between the feature amount vector of the collected data and the feature amount vector of the classification model, the distance (for example, Euclidean distance) between the feature amount vector of the collected data and the feature amount vector of the classification model may be computed. Then, the classification process 1i may acquire the classification ID of the feature amount vector of the classification model that has the closest distance. During the computation of the distance between the feature amount vector of the collected data and the feature amount vector of the classification model, a Mahalanobis distance as well as a Euclidean distance may be computed, and various distance computing techniques may be used. Through such process, a chronologically arranged row of classification IDs is obtained as the processing result of the classification process 1i, as illustrated in Fig. 6.

Further, the arithmetic processing device 1b, as described above, is provided with the function (tying process section 11) of performing the tying process 11 between the processing result of the detection process 1j (and determination process 1k) and the processing result of the classification process 1i. The tying process section 11 performs the process of tying the damage interval, which is the interval in which damage was detected by the damage detection process 1j, and the classification ID provided by the classification process 1i in the damage interval to each other. In this way, the arithmetic processing device 1b can identify the damage state that is the state of the machine in the damage interval, by means of the classification ID provided by the classification process 1i.

Fig. 7 illustrates the processing result of the detection process 1j (and determination process 1k) and the processing result of the classification process 1i that are chronologically arranged. In Fig. 7, 7a indicates the processing result of the detection process 1j (and determination process 1k), indicating the amplitude and wavelength of a repeated stress, as does 3j of Fig. 3. In Fig. 7, 7d indicates the start time of the repeated stress, and 7e indicates the end time of the repeated stress. In Fig. 7, 7b and 7c shown at the center and the bottom indicate the processing results of the classification process 1i. In Fig. 7, the numbers in parentheses at the center and the bottom, such as "(3)" at the center, indicate the values of the classification ID.

The processing result of the classification process 1i is obtained as a chronologically arranged row of classification IDs. The chronologically arranged row of classification IDs includes the following two types. One is the type in which, as indicated by 7b of Fig. 7, in the damage interval between the start time 7d and the end time 7e, the row of classification IDs consists of the same classification ID. In the example of Fig. 7, the row of classification IDs in the interval between the start time 7d and the end time 7e entirely consists of the classification ID (5). The other is the type in which, as indicated by 7c of Fig. 7, in the damage interval between the start time 7d and the end time 7e, the row of classification IDs is composed of a characteristic pattern. In the example of Fig. 7, the row of classification IDs in the damage interval is composed of the classification ID patterns (6), (6), (4), (7), (7), (7). The type in which the row of classification IDs consists of the same classification ID is observed when the operation of the machine is little. The type in which the row of classification IDs is composed of a pattern is observed when the machine performed an operation corresponding to the pattern. Because a change in the state of the machine manifests itself as a change in classification ID, the row of classification IDs has a pattern corresponding to the state of the machine. Thus, the row of classification IDs enables identification of the damage state that is the state of the machine in the damage interval.

Further, the arithmetic processing device 1b, as described above, is provided with the function (determination process section 1m) of performing the determination process 1m as to whether the classification ID tied by the tying process 1l is an unknown classification ID. The determination process section 1m performs the process to determine whether, based on the classification IDs recorded in the damage state classification ID database 1o, the classification ID tied by the tying process 11 is an unknown classification ID.

The determination process 1m performs different processes depending on the above-described type of the row of classification IDs obtained as the processing result of the classification process 1i. If the row of classification IDs is of the type consisting of the same classification ID, the determination process 1m references the records in the classification ID database 1o in which only one classification ID is recorded. In the example of 7b in Fig. 7, the determination process 1m, if the classification ID (5) tied to the damage interval is recorded in the classification ID database 1o, determines that the tied classification ID is a known classification ID (and not an unknown classification ID). On the other hand, the determination process 1m, if the classification ID (5) tied to the damage interval is not recorded in the classification ID database 1o, determines that the tied classification ID is an unknown classification ID.

The determination process 1m, if the row of classification IDs is of the type composed of a pattern, references the records in the classification ID database 1o in which items as illustrated in Fig. 8 are recorded. In Fig. 8, 8a indicates the item of classification ID pattern. In Fig. 8, 8b indicates the item of ID identifying the classification ID pattern of 8a. The determination process 1m performs a similarity determination between the classification ID pattern tied to the damage interval, as indicated by 7c in Fig. 7, and the patterns of the classification IDs recorded in the classification ID database 1o, as indicated by 8a in Fig. 8. For the similarity determination, a pattern recognition process by Dynamic Programming matching (DP matching) may be used.

The DP matching is a pattern matching technique using dynamic programming, and is a technique that takes elastic matching of patterns into consideration. Elastic matching is a technique for performing a matching process in which, for example, the multiple and successive appearance of the classification ID (6) or (7) in 7c of Fig. 7 is considered an "extension", and the influence of the "extension" is eliminated to assume that the classification IDs (6) and (7) are each appearing once. Therefore, the classification ID pattern shown in 7c of Fig. 7 and the classification ID pattern shown in #1 of 8a in Fig. 8 are recognized to be the same pattern. The DP matching is also capable of computing similarity. If all classification IDs included in the patterns match, the similarity will be 100%; if only some of the classification IDs included in the patterns match, the similarity will be a value lower than 100%. Even when the similarity is not 100%, the determination process 1m may determine that the classification ID pattern tied to the damage interval and the pattern of a classification ID recorded in the classification ID database 1o are the same pattern if the similarity is at a certain level. The determination process 1m, if the classification ID pattern tied to the damage interval is the same as the pattern of a classification ID recorded in the classification ID database 1o, determines that the tied classification ID is a known classification ID (and not an unknown classification ID). On the other hand, the determination process 1m, if the classification ID pattern associated with the damage interval is not the same as the pattern of any of the classification IDs recorded in the classification ID database 1o, determines that the tied classification ID is an unknown classification ID.

If it is determined that the classification ID tied by the tying process 11 is a known classification ID, a process of acquiring the state information 1g and the state information 1f is performed (corresponding to "NO" in 2b of Fig. 2). On the other hand, if the classification ID tied by the tying process 11 is determined to be an unknown classification ID (corresponding to "YES" in 2b of Fig. 2), the display process 1n and the registration process 1p are performed, as will be described below.

Further, the arithmetic processing device 1b, as described above, is provided with the function (display process section 1n) of performing the display process 1n for displaying that the classification ID tied by the tying process 11 is an unknown classification ID. That the classification ID tied by the tying process 11 is an unknown classification ID means that an unknown damage state occurred. The display process section 1n performs a process of either displaying information indicating the occurrence of the unknown damage state on a display device such as a display, or issuing a notice by means of an audio output device, such as a speaker. The arithmetic processing device 1b may omit the performing of the display process 1n.

Further, the arithmetic processing device 1b, as described above, is provided with the function (registration process section 1p) of performing the registration process 1p for registering the classification ID that was determined by the determination process 1m to be an unknown classification ID in the classification ID database 1o. In the example of 7b of Fig. 7, if the classification ID (5) is an unknown classification ID, the registration process section 1p performs the process of registering the classification ID (5) in the classification ID database 1o. In the example of Fig. 8, the registration process section 1p performs the process of registering the unknown classification ID pattern in the location of #3 under 8a of Fig. 8 where "Undefined" is noted, and also registering the ID identifying the pattern in the location under 8b. When the unknown classification ID pattern is registered in the location under 8a, a classification ID that appeared multiple times successively is registered as having appeared once.

Thus, the state detecting device 100 of Embodiment 1 is provided with the collection device 1a that collects, at a plurality of times, the state information 1f indicating the state of the machine that changes chronologically, and the arithmetic processing device 1b that processes a plurality of pieces of the state information 1f collected at the plurality of times to detect the state of the machine. The arithmetic processing device 1b is provided with the classification process section 1i that temporally divides the plurality of pieces of the state information 1f collected by the collection device 1a, classifies the feature amount vectors having the type of the state information 1f as feature amounts into any of a plurality of clusters (sets), and provides the classification ID. Further, the arithmetic processing device 1b is provided with the detection process section 1j that detects the damage the machine received, based on the state information 1g collected by the collection device 1a indicating the state of the machine that changes chronologically. Further, the arithmetic processing device 1b is provided with the tying process section 11 that ties the interval in which damage was detected by the detection process section 1j, to the classification ID provided by the classification process section 1i in the interval.

With such configuration, the state detecting device 100 of Embodiment 1 can identify the damage state, which is the state of the machine in the interval in which the machine received damage, by means of the classification ID provided by the classification process section 1i. In this way, the state detecting device 100 can easily detect the occurrence of the damage state in the damage interval tied to the classification ID, by simply referencing the classification ID provided by the classification process section 1i. Further, the state detecting device 100, by having the classification IDs identifying damage states recorded, can easily determine, based on the recorded classification IDs, whether the detected damage state is an unknown state that is not expected to provide damage. Accordingly, the state detecting device 100 of Embodiment 1 can easily detect the state of the machine, regardless of whether an unknown operation that is not expected to cause damage was performed.

Further, in the state detecting device 100 of Embodiment 1, the arithmetic processing device 1b is provided with the classification ID database 1o in which the classification IDs identifying damage states are recorded in advance. Further, the arithmetic processing device 1b is provided with the determination process section 1m that determines whether, based on the classification IDs recorded in the classification ID database 1o, the classification ID tied by the tying process section 11 is an unknown classification ID. Further, the arithmetic processing device 1b is provided with the registration process section 1p that registers the classification ID determined to be an unknown classification ID by the determination process section 1m in the classification ID database 1o.

With such configuration, the state detecting device 100 of Embodiment 1 can easily expand the classification ID database 1o in which the classification IDs identifying the damage states are recorded, and can more reliably and easily determine whether the detected damage state is an unknown state. Because the state detecting device 100 can reduce the frequency of occurrence of an unknown damage state, it becomes easier to detect the current state of the machine accurately. Thus, the state detecting device 100 of Embodiment 1 can easily detect the state of the machine regardless of whether an unknown operation that is not expected to cause damage is performed, and can also facilitate timely execution of machine maintenance, for example, thereby making it easier to sustain the health of the machine.

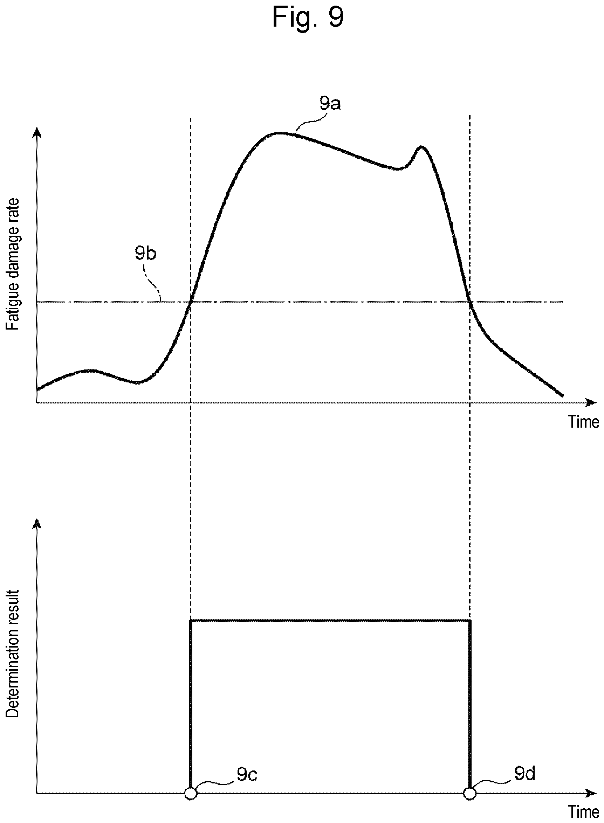

Fig. 9 illustrates another example of cutting-out of the damage interval.

In the foregoing description, the example in which the detection process 1j detects damage by means of the amplitude and wavelength of repeated stress has been described. However, the detection process 1j may detect damage only by means of the strength/weakness of a waveform related to stress. In Fig. 9, 9a indicates an example of a part cut out of the waveform of the fatigue damage rate shown in 3c of Fig. 3 is. The detection process 1j can set a threshold value 9b defining a strength/weakness of the waveform 9a, and detect a time 9c at which the waveform 9a changes to a threshold value 9b or more, and a time 9d at which the waveform 9a changes to less than the threshold value 9b, as a start time 9c and an end time 9d respectively of the damage interval. The detection process 1j may detect a maximum value of the waveform 9a in the damage interval as the damage amount the machine received in the damage interval. Alternatively, the detection process 1j may detect an average value of the waveform 9a in the damage interval as the damage amount the machine received in the damage interval.

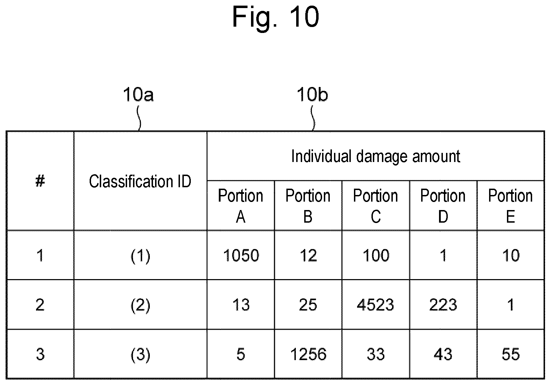

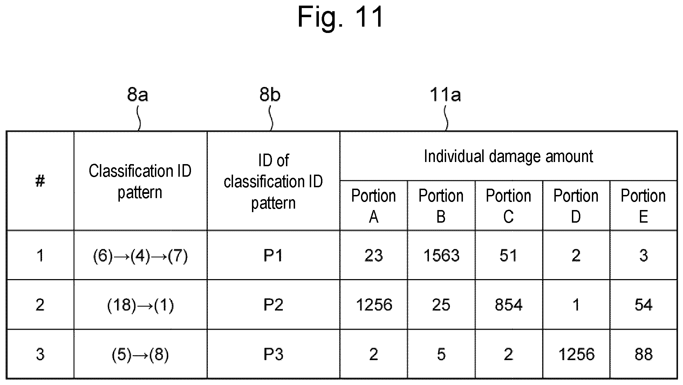

Fig. 10 illustrates an example (No. 2) of the information recorded in the damage state classification ID database 1o. Fig. 11 illustrates an example (No. 3) of the information recorded in the damage state classification ID database 1o.

The tying process 11 may not just tie the damage interval detected by the detection process 1j to the classification ID provided by the classification process 1i in the damage interval, but may also tie the damage amount (individual damage amount) the machine received in the damage interval. Then, in the classification ID database 1o, as illustrated in Fig. 10 and Fig. 11, the individual damage amount may be tied to the classification ID provided by the classification process 1i in the damage interval and recorded.

Fig. 10 illustrates the case in which the row of classification IDs obtained as the processing result of the classification process 1i as described above is of the type consisting of the same classification ID. In Fig. 10, 10a shows the item of classification ID. In Fig. 10, 10b shows the item of individual damage amount. As illustrated in Fig. 10, the item 10b of individual damage amount may be recorded for each portion of the machine separately.

Fig. 11 illustrates the case in which the row of classification IDs obtained as the processing result of the classification process 1i as described above is of the type composed of a pattern. In Fig. 11, 11a shows the item of classification ID pattern. In Fig. 11, 11b shows the item of ID identifying the classification ID pattern. In Fig. 11, 11c shows the item of individual damage amount. The item 11b for individual damage amount may be recorded for each portion of the machine separately, as in Fig. 10. In the case of Fig. 11, because the individual damage amounts vary in the damage interval (see Fig. 9), an average value, a maximum value, a cumulative value, or the like of the individual damage amounts in the damage interval may be used as the representative value of the individual damage amounts tied to the classification ID pattern. It goes without saying that any statistical value other than the average value and the like may be used as the representative value of the individual damage amounts in the damage interval.

With such configuration, the state detecting device 100 of Embodiment 1 can not only identify the damage state by means of the classification ID provided by the classification process section 1i, but can also identify the individual damage amounts. In this way, the state detecting device 100 can easily detect not just the occurrence of the damage state by simply referencing the classification ID provided by the classification process section 1i, but can also easily detect how much damage the machine received in the damage interval. In this way, the state detecting device 100 can more accurately detect the current fatigue damage degree and the like of the machine. Thus, the state detecting device 100 of Embodiment 1 can easily and accurately detect the state of the machine, and can also perform machine maintenance in a timelier manner, thereby making it possible to further sustain the health of the machine.

The function provided in the arithmetic processing device 1b to perform the detection process 1j corresponds to an example of a "detection process section" set forth in the claims. The classification model database 1h provided in the arithmetic processing device 1b corresponds to an example of a "second recording section" set forth in the claims. The function provided in the arithmetic processing device 1b to perform the classification process 1i corresponds to an example of a "classification process section" set forth in the claims. The function provided in the arithmetic processing device 1b to perform the determination process 1m corresponds to an example of a "first determination process section" set forth in the claims. The damage state classification ID database 1o provided in the arithmetic processing device 1b corresponds to an example of a "first recording section" set forth in the claims. The function provided in the arithmetic processing device 1b to perform the registration process 1p corresponds to an example of a "first registration process section" set forth in the claims.

### [Embodiment 2]

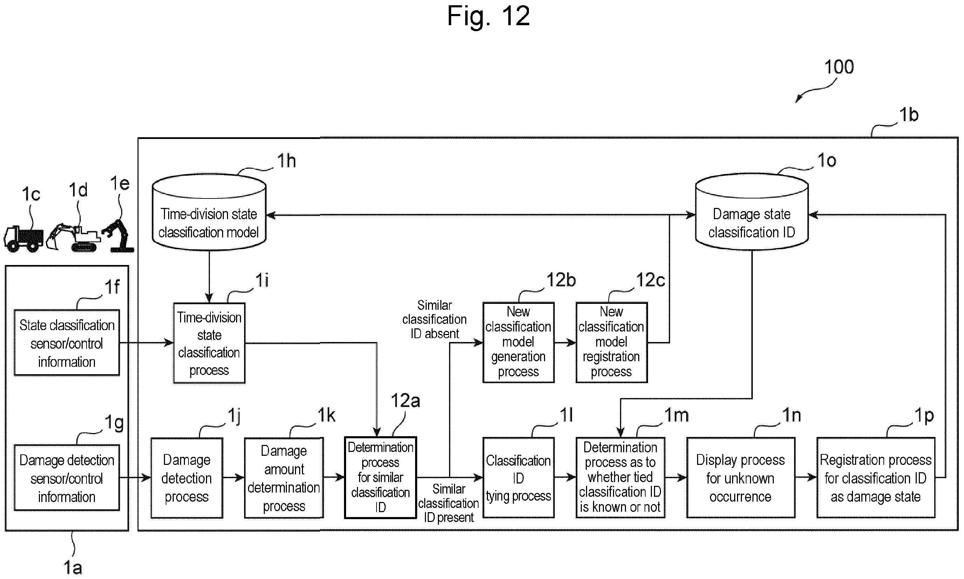

With reference to Fig. 12 to Fig. 13, the state detecting device 100 of Embodiment 2 will be described. Descriptions of components and operations in the state detecting device 100 of Embodiment 2 that are similar to those of the preceding embodiment will be omitted.

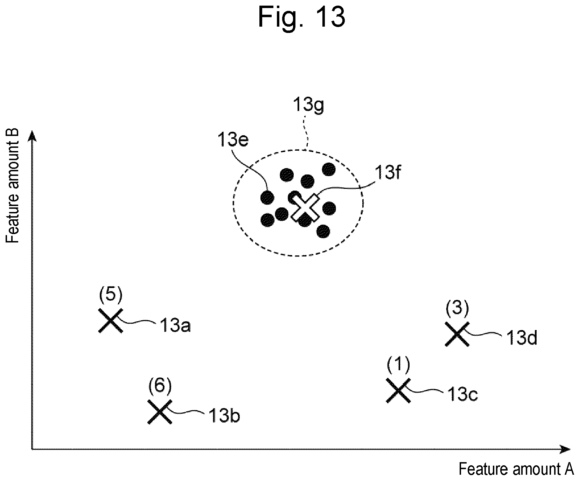

Fig. 12 is a processing block diagram of the state detecting device 100 of Embodiment 2. Fig. 13 is an illustrative diagram of a classification ID cluster distribution.

In the state detecting device 100 of Embodiment 1, the feature amount vectors that are recorded in the classification model database 1h in advance are searched for a feature amount vector that has the closest distance to the feature amount vector to be classified that has been identified by the classification process 1i. Then, in the state detecting device 100 of Embodiment 1, the classification ID of the feature amount vector obtained by the search is provided to the feature amount vector to be classified as the classification ID indicating the state of the machine at the time the state information 1f on which the feature amount vector to be classified is based was collected.

In this case, a problem illustrated in Fig. 13 may be caused. Fig. 13 illustrates a 2-dimensional feature amount space in which one feature amount A of a feature amount vector is shown on the horizontal axis, and another one feature amount B of the feature amount vector is shown on the vertical axis. While the feature amount vectors that are actually used in the present invention have a very large number of dimensions, the number of dimensions is reduced for simplicity, and the 2-dimensional feature amount space is used for the purpose of description. In Fig. 13, 13a, 13b, 13c, and 13d respectively show the position coordinates of the feature amount vectors of the classification IDs (5), (6), (1), and (3) recorded in the classification model database 1h in advance. In Fig. 13, 13e enclosed in 13g shows the position coordinates of each of a group of the feature amount vectors to be classified that have been identified in a newly detected damage interval. The position coordinates 13g of the group of feature amount vectors are far from the position coordinates of the feature amount vectors recorded in the classification model database 1h in advance, and do not appear to belong to any of the clusters of the classification IDs. This is believed to be because the learning intervals for building the classification model database 1h did not include a state of the machine similar to the newly detected damage interval.

Accordingly, the state detecting device 100 of Embodiment 2 is provided with the process functions illustrated in Fig. 12. The arithmetic processing device 1b of Embodiment 2 is provided with the function (determination process section 12a) of performing a determination process 12a for determining whether the classification ID of a feature amount vector similar to the feature amount vector to be classified that has been identified by the classification process 1i is recorded in the classification model database 1h. That is, the determination process section 12a performs a process to determine whether the classification ID that should be provided to the feature amount vector to be classified that has been identified by the classification process 1i is recorded in the classification model database 1h, based on the feature amount vector to be classified that has been identified by the classification process 1i, and the feature amount vectors recorded in the classification model database 1h in advance.

The determination process 12a computes the distance between the feature amount vector to be classified and the feature amount vectors recorded in the classification model database 1h, as described in Embodiment 1. Then, the determination process 12a, if the computed distance is less than or equal to a preset threshold value, determines that the classification ID of a feature amount vector similar to the feature amount vector to be classified is recorded in the classification model database 1h. That is, in this case, the determination process 12a determines that the classification ID that should be provided to the feature amount vector to be classified is recorded in the classification model database 1h. Thereafter, the tying process 11 is performed as in Embodiment 1. On the other hand, the determination process 12a, if the computed distance is greater (farther) than the preset threshold value, determines that the classification ID of a feature amount vector similar to the feature amount vector to be classified is not recorded in the classification model database 1h. That is, in this case, the determination process 12a determines that the classification ID that should be provided to the feature amount vector to be classified is not recorded in the classification model database 1h. Thereafter, in Embodiment 2, a generation process 12b and a registration process 12c are performed as will be described below.

The arithmetic processing device 1b of Embodiment 2 is provided with the function (generation process section 12b) of performing the generation process 12b for generating a new classification model if the classification ID of the feature amount vector similar to the feature amount vector to be classified is not recorded in the classification model database 1h. That is, the generation process section 12b performs the process of generating a new classification ID if the classification ID that should be provided to the feature amount vector to be classified is not recorded in the classification model database 1h.

Further, the arithmetic processing device 1b of Embodiment 2 is provided with the function (registration process section 12c) of performing the registration process 12c for registering the new classification model generated by the generation process 12b in the classification model database 1h. That is, the registration process section 12c performs the process of registering the new classification ID, generated by the generation process section 12b, and the feature amount vector to which the classification ID should be provided, in the classification model database 1h in association with each other.

The generation process 12b and the registration process 12c may be performed according to either of the following two techniques (technique 1 or technique 2). In technique 1, the generation process 12b performs a process in which the group of the feature amount vectors to be classified that have been identified in the newly detected damage interval is added to the learning interval for building the classification model database 1h, and the classification model database 1h is rebuilt using a classification technique, such as clustering. In this way, the generation process 12b, as shown in 13f of Fig. 13, generates representative coordinate values (values of the feature amounts) of the representative feature amount vector representing the group of the feature amount vectors to be classified that have been identified in the newly detected damage interval. Then, the generation process 12b generates the new classification ID that should be provided to the representative feature amount vector having the generated representative coordinate values. The registration process 12c registers the representative feature amount vector having the generated representative coordinate values, and the generated new classification ID in the classification model database 1h in association with each other. The registration process 12c registers the generated new classification ID in the classification ID database 1o as the classification ID identifying the damage state.

In technique 2, the generation process 12b computes, from the group of the feature amount vectors to be classified that have been identified in the newly detected damage interval, the representative coordinate values of the group of the feature amount vectors. The representative coordinate values of the group of the feature amount vectors may be computed by, for example, calculating the center of gravity coordinate values or average coordinate values of the group of feature amount vectors. The generation process 12b generates the new classification ID that should be provided to the representative feature amount vector having the computed representative coordinate values. The registration process 12c registers the representative feature amount vector having the computed representative coordinate values, and the generated new classification ID in the classification model database 1h in association with each other. The registration process 12c registers the generated new classification ID in the classification ID database 1o as the classification ID identifying the damage state.

With such technique 1 or technique 2 described above, the state detecting device 100 of Embodiment 2 can solve the problem described above with reference to Fig. 13. Typically, because relearning the classification model database 1h as according to technique 1 places large processing load on the arithmetic processing device 1b and takes processing time, technique 2 is more effective. The generation process 12b, if it is necessary to newly generate a classification ID, may perform a hybrid process incorporating technique 1 and technique 2 in which technique 2 is implemented several times initially (the number of times being not more than a preset threshold value), and then, as newly generated classification IDs accumulate, technique 1 is used to perform the relearning of the classification model database 1h.

Thus, the state detecting device 100 of Embodiment 2, if the classification ID that should be provided to the feature amount vector identified by the classification process 1i is not recorded, generates a new classification ID and registers the new classification ID and the feature amount vector in the classification model database 1h in association with each other.

In this way, the state detecting device 100 of Embodiment 2 can easily expand the classification model database 1h in which the feature amount vectors identifying the states of the machine are recorded, and can further reliably and easily classify the state of the machine. In addition, because the state detecting device 100 can reduce the frequency of the occurrence of the non-recording of the classification ID that should be provided to the feature amount vector identified by the classification process 1i, it becomes easier to accurately detect the current state of the machine. Thus, the state detecting device 100 of Embodiment 2 can easily detect the state of the machine regardless of whether an unknown operation that is not expected to cause damage is performed, and can facilitate timely execution of machine maintenance, for example, making it easier to sustain the health of the machine.

The function provided in the arithmetic processing device 1b to perform the determination process 12a corresponds to an example of a "second determination process section" set forth in the claims. The function provided in the arithmetic processing device 1b to perform the generation process 12b corresponds to an example of a "generation process section" set forth in the claims. The function provided in the arithmetic processing device 1b to perform the registration process 12c corresponds to an example of a "second registration process section" set forth in the claims.

### [Embodiment 3]

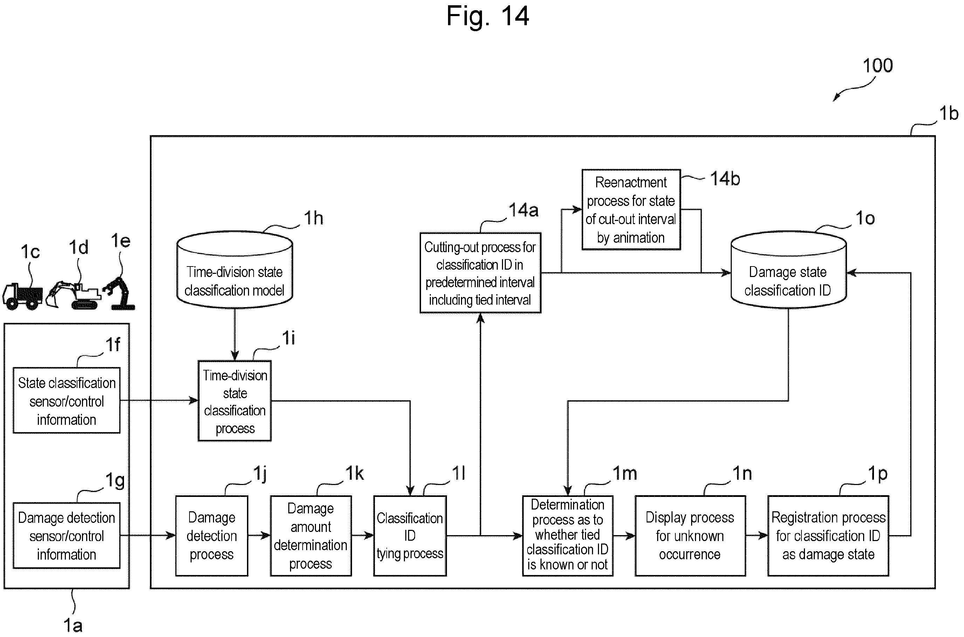

With reference to Fig. 14 to Fig. 17, the state detecting device 100 of Embodiment 3 will be described. Descriptions of components and operations in the state detecting device 100 of Embodiment 3 that are similar to those of the preceding embodiments will be omitted.

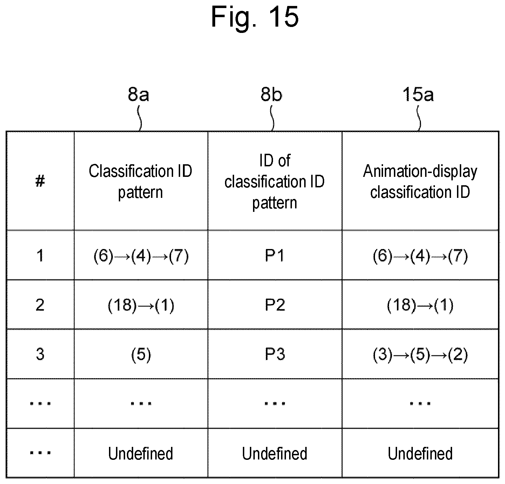

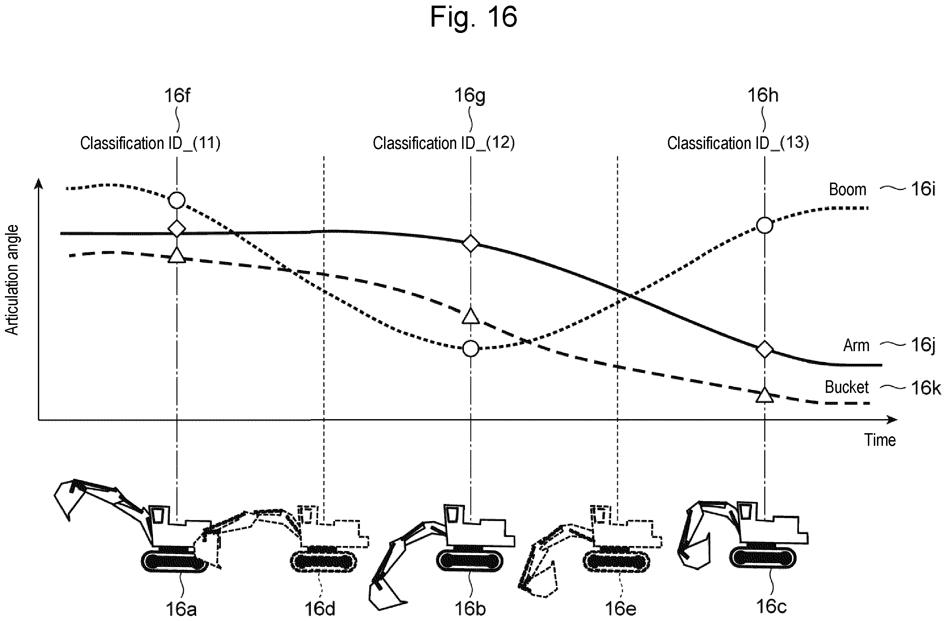

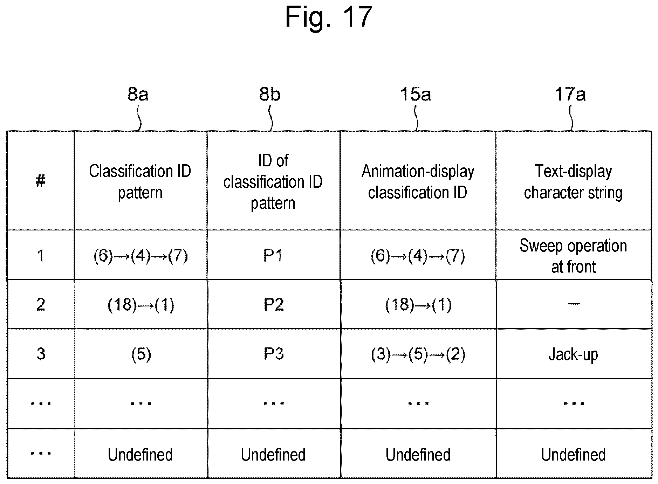

Fig. 14 is a processing block diagram of the state detecting device 100 of Embodiment 3. Fig. 15 illustrates an example (No. 4) of the information recorded in the damage state classification ID database 1o. Fig. 16 is an illustrative diagram of keyframe animation. Fig. 17 illustrates an example (No. 5) of the information recorded in the damage state classification ID database 1o.

In Embodiment 3, a technique for visualizing the state of the machine will be described. The arithmetic processing device 1b of Embodiment 3 is provided with the function (cutting-out process section 14a) of performing a cutting-out process 14a for cutting out the classification ID provided by the classification process 1i in a predetermined interval that includes the interval tied to the classification ID by the tying process 11. That is, the cutting-out process section 14a performs a process of cutting out the classification ID provided by the classification process 1i in the predetermined interval. The classification ID cut out by the cutting-out process 14a is used when generating an animation in a reenactment process 14b, as will be described below. The predetermined interval cut out by the cutting-out process 14a may be the damage interval itself that is the interval tied to the classification ID by the tying process 11, or may be an interval including times before and after the damage interval.

For example, if the row of classification IDs obtained as the processing result of the classification process 1i as described above is of the type consisting of the same classification ID, as in 7b of Fig. 7, the predetermined interval cut out by the cutting-out process 14a may preferably be an interval including times before and after the damage interval (in the case of 7b of Fig. 7, the interval including the classification IDs (3) and (2) before and after the damage interval). In the case of this type too, if it suffices to reenact the state of the machine in the damage interval itself, the predetermined interval cut out by the cutting-out process 14a may be the damage interval itself. In this case, an input device capable of receiving an input made by user operation may be provided so as to allow for selection of the predetermined interval that is cut out by the cutting-out process 14a.

On the other hand, if the row of classification IDs obtained as the processing result of the classification process 1i is of the type composed of a pattern, as in 7c of Fig. 7, for example, the predetermined interval cut out by the cutting-out process 14a may be the damage interval itself. The cutting-out process 14a, after cutting out the classification IDs in the predetermined interval, may integrate the classification IDs that appear multiple times successively, or may leave the classification IDs that appear multiple times successively in the cut-out state without integrating them. However, when an animation is generated in the reenactment process 14b, a playback speed for the animation will become necessary. If the classification IDs are integrated, time information such as the start time of integration may preferably accompany the classification IDs. Fig. 15 illustrates an example in which an item related to the information about an animation-display classification ID is added to the classification ID database 1o. In Fig. 15, 15a shows the item related to the information about the animation-display classification ID. Fig. 15 shows the example in which the classification IDs that appear multiple times successively are integrated.

The arithmetic processing device 1b of Embodiment 3 is provided with the function (reenactment process section 14b) of performing the reenactment process 14b for generating an animation (moving image) that reenacts the state of the machine in the predetermined interval from which the classification IDs have been cut out by the cutting-out process 14a. The reenactment process section 14b performs the process of generating the animation (moving image) that reenacts the state of the machine in the predetermined interval, based on the feature amount vectors corresponding to the classification IDs cut out by the cutting-out process 14a.

The reenactment process 14b utilizes keyframe animation, which is used in computer graphics, to generate the animation that reenacts the state of the machine in the predetermined interval. Fig. 16 illustrates an example in which an animation reenacting the state of a hydraulic excavator as an example machine is generated. The feature amount vectors corresponding to the classification IDs cut out by the cutting-out process 14a include information about the bending angle of each articulation of the front work implement as the state of the machine (excavator). An example is the information about the bending angles of the articulations of the boom, the arm, and the bucket. Keyframe animation is a method for generating the bending angles between the classification IDs by interpolation. For example, the animation-display classification ID includes a classification ID (11) indicated by 16f of Fig. 16, a classification ID (12) indicated by 16g, and a classification ID (13) indicated by 16h. In the case of an animation that does not utilize keyframe animation, frames 16a, 16b, and 16c respectively reenacting the states of the excavator corresponding to the classification IDs (11), (12), and (13) are generated, and these are switched and displayed on the time axis. Thus, the animation that does not utilize keyframe animation results in a jerky animation incapable of smoothly reenacting the movements of the excavator. The frames discussed above mean not the still images that are used for cell animation, but still images that are generated through projection of a 3-dimensional shape model generated using 3-dimensional computer graphics onto a 2-dimensional projection screen.

Accordingly, the reenactment process 14b, in order to perform smooth reenactment of the movements of the excavator using keyframe animation, generates frames that reenact the states of the excavator between the frames 16a, 16b, and 16c, thereby performing keyframe interpolation. In the example of Fig. 16, the reenactment process 14b performs keyframe interpolation for each bending angle of each of the articulations of the excavator. In Fig. 16, 16i shows the bending angle of the boom, 16j shows the bending angle of the arm, and 16k shows the bending angle of the bucket. In Fig. 16, each of the curved lines indicated by 16i, 16j, and 16k shows the result of interpolation of the bending angle of each of the articulations between the three points 16f, 16g, and 16h of Fig. 16, using the three points as the control points of an interpolation function. For the interpolation function, various functions may be used, such as a spline function. By using such interpolation functions, the reenactment process 14b can smoothly interpolate the bending angle of each of the articulations at the time between the control points of the interpolation function, and can generate an animation that can smoothly reenact the movements of the excavator. In Fig. 16, 16d and 16e indicate the interpolated frames, interpolating between the frames 16a and 16b and between the frames 16b and 16c. Of course, it is possible to generate a frame that interpolate between the frame 16a and the frame 16d. In order to reenact the actual operation speed of the machine, the generated times of the classification IDs used as keyframes are necessary. The reenactment process 14b also interpolates for the time information of the interpolated frame, based on the time information of the keyframes. In this way, the reenactment process 14b can reenact the operation speed of the machine. The reenactment process 14b may generate a moving image other than an animation.

The arithmetic processing device 1b of Embodiment 3 is provided with the function (display process section) of performing the display process for causing the display device to display the animation (moving image) generated by the reenactment process 14b. While the function of performing this display process is not illustrated in Fig. 14, the function may be included in the function of performing the display process 1n, for example, or in the function of performing the reenactment process 14b.

Thus, the state detecting device 100 of Embodiment 3 cuts out the classification IDs provided by the classification process 1i in the predetermined interval that includes the interval tied to the classification IDs by the tying process 11. Then, the state detecting device 100, based on the feature amount vectors corresponding to the cut-out classification IDs, generates the animation that smoothly reenacts the state of the machine, and causes the display device to display the animation.

In this way, the state detecting device 100 of Embodiment 3 can show what state the machine was in during the damage interval, in a visually easily understandable manner, thereby allowing the user to intuitively know the damage state. Further, in the state detecting device 100 of Embodiment 3, because the animation is generated using the feature amount vectors corresponding to the classification IDs, it is possible to generate the animation using less information than the state information 1f that has been actually collected.

It is noted that the state detecting device 100 of Embodiment 3 may generate the animation based on the state information 1g, rather than generating the animation based on the feature amount vectors corresponding to the cut-out classification ID, i.e., based on the state information 1f constituting the feature amount vectors. Further, the state detecting device 100 of Embodiment 3 may convert the content of the generated animation into text and register the text in the classification ID database 1o as a text-display character string, as shown in 17a of Fig. 17. In this case, the text-display character string 17a is recorded in the classification ID database 1o in association with the information 15a of the animation-display classification ID.

Further, the function provided in the arithmetic processing device 1b to perform the cutting-out process 14a corresponds to an example of a "cutting-out process section" set forth in the claims. The function provided in the arithmetic processing device 1b to perform the reenactment process 14b corresponds to an example of a "reenactment process section" set forth in the claims. The function provided in the arithmetic processing device 1b to perform the animation display process that is included in the function to perform the reenactment process 14b or the display process 1n corresponds to an example of a "display process section" set forth in the claims.

### [Embodiment 4]

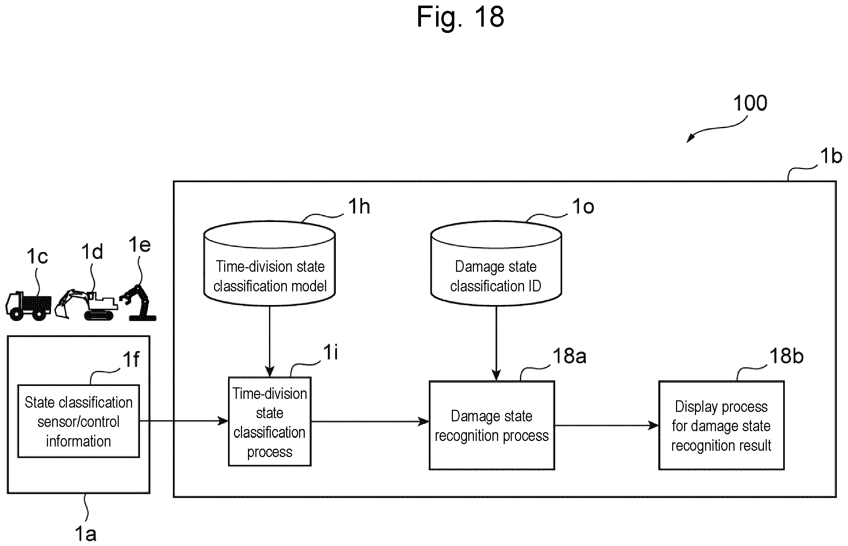

With reference to Fig. 18, the state detecting device 100 of Embodiment 4 will be described. Descriptions of components and operations in the state detecting device 100 of Embodiment 4 that are similar to those of the preceding embodiments will be omitted.

Fig. 18 is a processing block diagram of the state detecting device 100 of Embodiment 4.

In Embodiment 4, a technique for utilizing the damage state classification ID database 1o to recognize the damage state will be described. The state detecting device 100 of Embodiment 4 recognizes the damage state without using the state information 1g. In order to acquire the state information 1g, a sensor retrofitted to the machine and a device for acquiring control information have been required. However, it is possible to recognize the damage interval and the damage state without using such information.

The arithmetic processing device 1b of Embodiment 4 is provided with the function (recognition process section 18a) of performing a recognition process 18a for recognizing the damage state identified by the classification ID provided by the classification process 1i. The recognition process section 18a performs the process of recognizing the damage state identified by the classification ID provided by the classification process 1i, based on the classification ID provided by the classification process 1i and the classification IDs recorded in the classification ID database 1o.

The recognition process 18a performs the process of a search as to whether the row of classification IDs obtained as the processing result of the classification process 1i as described above is recorded in the classification ID database 1o as a classification ID pattern, as shown in 8a of Fig. 17, for example. If the row of classification IDs is of the type consisting of the same classification ID (#3 in Fig. 17), the recognition process 18a may perform the search by determining whether the classification ID is recorded in the classification ID database 1o. If the row of classification IDs is of the type composed of a pattern (#1 and #2 in Fig. 17), the recognition process 18a may perform the search using a pattern matching technique, such as the DP matching described above. In this way, the recognition process 18a can detect the damage state without using the state information 1g. The recognition process 18a can recognize the damage interval by assuming that, of the row of classification IDs obtained as the processing result of the classification process 1i as described above, the time at which the initial classification ID was provided is the start time of the damage state, and the time at which the last classification ID was provided is the end time of the damage state.

Further, the arithmetic processing device 1b of Embodiment 4 is provided with the function (display process section 18b) of performing a display process 18b for causing the display device to display the result of recognizing the damage state by the recognition process 18a. If the search by the recognition process 18a indicates that the row of classification IDs obtained as the processing result of the classification process 1i as described above is recorded in the classification ID database 1o, the display process section 18b can acquire the animation-display classification ID 15a and the text-display character string 17a shown in Fig. 17, for example. The display process section 18b uses the animation-display classification ID 15a and the text-display character string 17a that have been acquired to perform the process of causing the display device to display the animation reenacting the damage state.

Thus, the state detecting device 100 of Embodiment 4 can recognize the damage state without using the state information 1g. Accordingly, even if the sensor and the like for acquiring the state information 1g has failed, the state detecting device 100 of Embodiment 4 can easily detect the damage state by means of the classification ID provided by the classification process section 1i. The state detecting device 100 of Embodiment 4 can easily determine whether the detected damage state is an unknown state that is not expected to provide damage, based on the classification IDs recorded in the classification ID database 1o. Thus, the state detecting device 100 of Embodiment 4 can easily detect the state of the machine regardless of whether an unknown operation that is not expected to cause damage is performed.

The function provided in the arithmetic processing device 1b to perform the recognition process 18a corresponds to an example of a "recognition process section" set forth in the claims. The function provided in the arithmetic processing device 1b to perform the display process 18b corresponds to an example of a "display process section" set forth in the claims.

### [Embodiment 5]

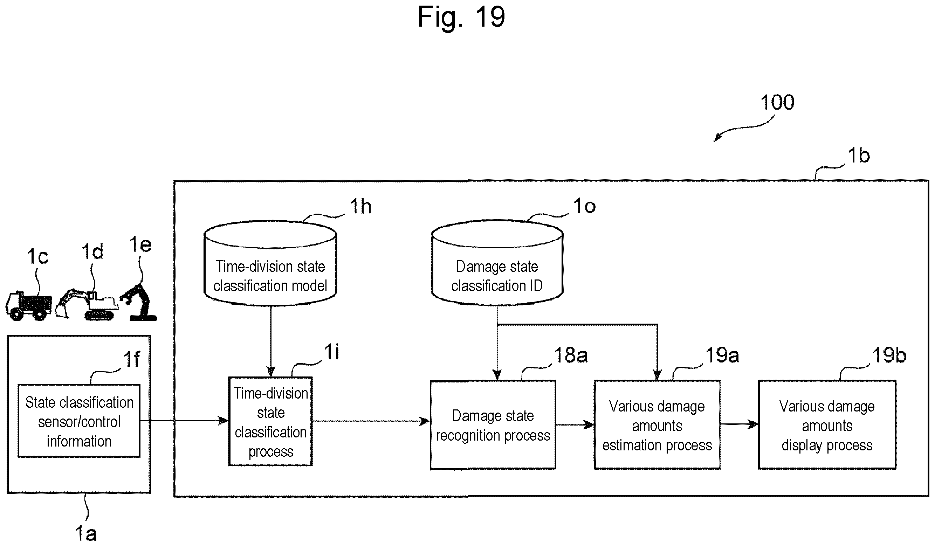

With reference to Fig. 19 to Fig. 21, the state detecting device 100 of Embodiment 5 will be described. Descriptions of components and operations in the state detecting device 100 of Embodiment 5 that are similar to those of the preceding embodiments will be omitted.

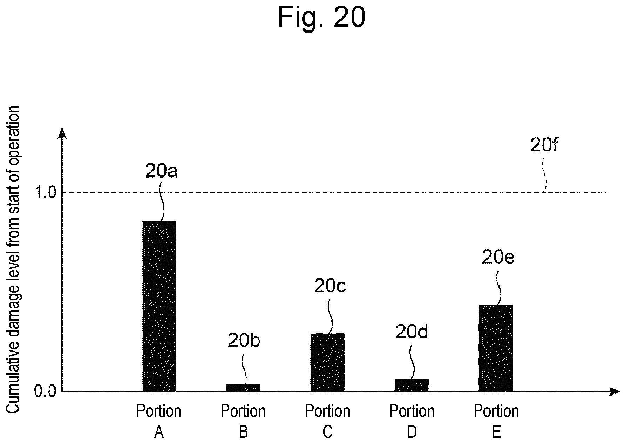

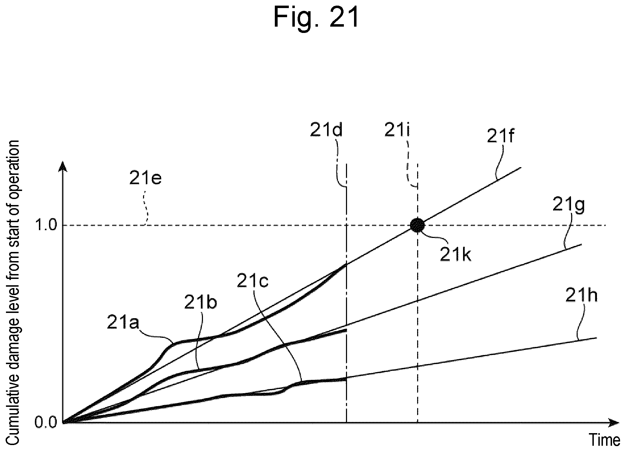

Fig. 19 is a processing block diagram of the state detecting device 100 of Embodiment 5. Fig. 20 illustrates an example of cumulative damage levels. Fig. 21 illustrates an example of chronological changes in the cumulative damage level.

In the state detecting device 100 of Embodiment 5, the arithmetic processing device 1b is provided with the function (estimation process section 19a) of performing an estimation process 19a for the damage amount, based on the processing result of the recognition process 18a of Embodiment 4. In the classification ID database 1o, as illustrated in Fig. 10 and Fig. 11, the individual damage amounts received by the portions of the machine in the damage interval may be tied to the classification IDs (or the classification ID patterns) and recorded in advance. The estimation process section 19a, upon recognizing a damage state from the recognition result of the recognition process 18a, performs the process of identifying the individual damage amounts from the classification ID identifying the damage state (for example, the classification ID (1) in #1 of Fig. 10). That is, the estimation process section 19a performs the process of identifying the individual damage amounts corresponding to the damage state recognized by the recognition process 18a, based on the classification ID identifying the damage state recognized by the recognition process 18a and the classification IDs recorded in the classification ID database 1o. The individual damage amounts shown in Fig. 10 and Fig. 11 are the damage amounts the machine received due to a single event.

If the damage amount is a measurement value of stress or a value with which it is possible to estimate stress, the estimation process 19a can use an S-N diagram to convert the individual damage amounts into damage levels. The S-N diagram shows the relationship between repeated stress and the number of repetitions of stress before the material ruptures. The damage level is calculated from a single repeated stress (stress amplitude) using the S-N diagram. When the cumulative damage level, which is the cumulative value of damage levels, is 1, this indicates that the material will rupture. That is, the damage level may be considered the amount consumed of the life of the machine. Therefore, the estimation process 19a can use the S-N diagram to convert the individual damage amounts shown in Fig. 10 and Fig. 11 into damage levels. The estimation process 19a may acquire the S-N diagram in advance by using the FAT class according to the International Institute of Welding (IIW), or by actually performing a life test of the machine, for example. If it is difficult to acquire the S-N diagram, the estimation process 19a may acquire a damage level tendency from the slope of a general S-N diagram. In this case, although the estimation process 19a is unable to tell the absolute value of the damage level, it can determine the damage level tendency (large or small). By calculating the damage level, the estimation process 19a can estimate the influence a single damage state has on the life of the machine, calculate the cumulative damage level for each portion of the machine to estimate the consumed amount of life or the remaining amount of life, or predict the life of each portion of the machine from the chronological changes in the cumulative damage level.

Further, the arithmetic processing device 1b of Embodiment 5 is provided with the function (display process section 19b) of performing a display process 19b for causing the display device to display the estimation result of the estimation process 19a. The display process section 18b performs the process of visualizing, for example, the influence of a single damage state on the life of the machine, the consumed amount of life or the remaining amount of life of the portions of the machine, and the prediction result of the life of each portion of the machine, as estimated by the estimation process 19a.

Fig. 20 and Fig. 21 illustrate examples of visualization. Fig. 20 shows the cumulative damage levels of portions of the machine. In Fig. 20, 20f shows the line of cumulative damage level 1.0. When the cumulative damage level reaches 1.0, the portions of the machine reach their lives. In Fig. 20, 20a to 20e show the cumulative damage levels of the portions of the machine. In Fig. 20, the cumulative damage level 20a of portion A is closest to the line 20f, indicating that the remaining amount of life is the smallest. The display process 19b may change the display mode of the graph of the cumulative damage levels in Fig. 20 in accordance with the remaining amount of life. For example, the display process 19b may change the color of the graph shown in Fig. 20 from green to yellow, and from yellow to red as the remaining amount of life becomes less.

Fig. 21 shows chronological changes in the cumulative damage level. In Fig. 21, 21e is the line of cumulative damage level 1.0. In Fig. 21, 21a to 21c show the chronological changes in the cumulative damage levels of the portions of the machine. In Fig. 21, 21d is the line of the current point of time. In Fig. 21, 21f to 21h are the straight lines indicating the prediction results of the chronological changes 21a to 21c in the cumulative damage level. The time indicated by the intersection point of the straight lines 21f to 21h showing the prediction results and the line 21e of the cumulative damage level 1.0 indicates the time at which the life is reached. For example, the portion 21a in Fig. 21 is predicted to reach its life at time 21i indicated by an intersection point 21k of the straight line 21f indicating the prediction result and the line 21e. The display process 19b can display the remaining life (between time 21d and time 21i), i.e., the time before the life is reached; display information prompting placing an order for a component for repair; and change the color of the graph shown in Fig. 21 as in Fig. 20 for display, for example. Further, the display process 19b may display the drawings and the like of a relevant portion when the graph shown in Fig. 20 or Fig. 21 is operated (for example, a click of a mouse) by the user.

Thus, the state detecting device 100 of Embodiment 5 can estimate the individual damage amounts from the processing result of the recognition process 18a. Accordingly, the state detecting device 100 of Embodiment 5 can calculate the damage level and the cumulative damage level from the estimated individual damage amounts. The state detecting device 100 of Embodiment 5 can estimate the influence a single damage state has on the life of the machine; estimate the consumed amount of life or the remaining amount of life for each portion of the machine; and predict the life of the machine from chronological changes in the cumulative damage level. Thus, the state detecting device 100 of Embodiment 5 can detect not just what state the machine was in in the damage interval, but can also detect, from various points of view, how the state of the machine will change in the future.

The function provided in the arithmetic processing device 1b of Embodiment 5 to perform the estimation process 19a may be provided in the arithmetic processing device 1b of Embodiments 1 to 3. For example, the arithmetic processing device 1b of Embodiments 1 to 3 may be provided with the function to perform the estimation process 19a for calculating the damage level and the cumulative damage level from the individual damage amounts to estimate the consumed amount of life or the remaining amount of life for each portion of the machine, and to predict the life of each portion of the machine from a chronological change in the cumulative damage level. In Patent Literature 3 discussed above, because it was possible to calculate the damage level only with regard to damage states that are determined in advance, it was not possible to estimate the damage level of an unexpected damage state. However, by providing the arithmetic processing device 1b of Embodiments 1 to 3 with the function to perform the estimation process 19a, it becomes possible to estimate the damage level of an unexpected damage state.

The function provided in the arithmetic processing device 1b to perform the estimation process 19a corresponds to an example of an "estimation process section" set forth in the claims. The function provided in the arithmetic processing device 1b to perform the display process 19b corresponds to an example of a "display process section" set forth in the claims.

### [Embodiment 6]

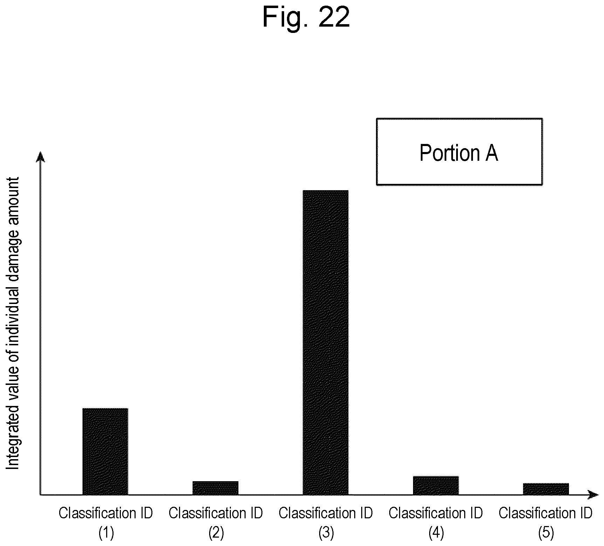

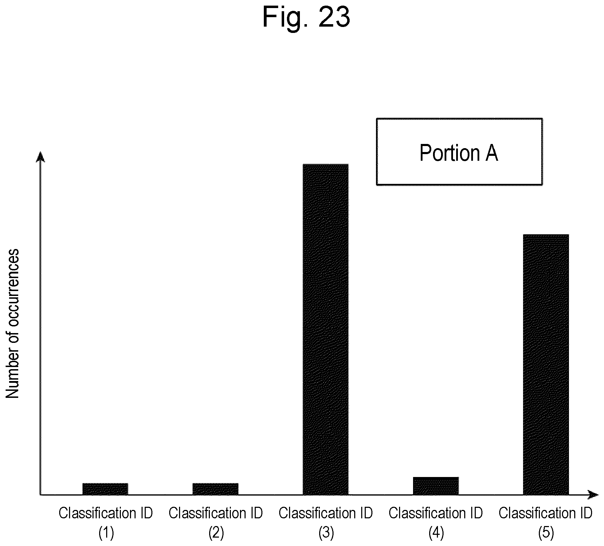

With reference to Fig. 22 and Fig. 23, the state detecting device 100 of Embodiment 6 will be described. Descriptions of components and operations in the state detecting device 100 of Embodiment 6 that are similar to those of the preceding embodiments will be omitted.

Fig. 22 illustrates an example of visualization, performed in the state detecting device 100 of Embodiment 6, of the integrated values of individual damage amounts. Fig. 23 illustrates an example of visualization of the number of occurrences of the damage state.

In Embodiment 6, a technique for identifying and visualizing the state of the machine that is the main cause of the damage amount received by each portion of the machine will be described. In Embodiment 5, the arithmetic processing device 1b is provided with the function to perform the estimation process 19a and the display process 19b, and can calculate and visualize the damage level and the cumulative damage level for each portion of the machine, from the individual damage amounts recorded in the classification ID database 1o illustrated in Fig. 10 and Fig. 11. The arithmetic processing device 1b of Embodiment 6 is also provided with the function to perform the estimation process 19a and the display process 19b. However, the arithmetic processing device 1b of Embodiment 6 can integrate the individual damage amount of a certain portion recorded in the classification ID database 1o for each classification ID, to calculate and visualize an integrated value. Then, the arithmetic processing device 1b of Embodiment 6 can accumulate a plurality of the integrated values calculated for each classification ID to estimate a cumulative damage amount.

That is, the estimation process 19a of Embodiment 6, based on the classification ID identifying the damage state recognized by the recognition process 18a and the classification IDs recorded in the classification ID database 1o, identifies the individual damage amount corresponding to the damage state recognized by the recognition process 18a. Then, the estimation process 19a of Embodiment 6, based on the identified individual damage amount and the number of occurrences of the damage state corresponding to the individual damage amount (i.e., the number of times the individual damage amount is received), calculates the integrated value of the individual damage amount for each classification ID. Then, the estimation process 19a of Embodiment 6 accumulates a plurality of the integrated values calculated for each classification ID, and estimates a cumulative damage amount the machine received. Then, the display process 19b of Embodiment 6 causes the display device to display the processing result of the estimation process 19a.

Specifically, the estimation process 19a of Embodiment 6, by multiplying the individual damage amount tied to a certain classification ID by the number of occurrences of the damage state corresponding to the individual damage amount, calculates the integrated value of the individual damage amount for each classification ID. The estimation process 19a, by calculating the sum of each of a plurality of the integrated values calculated for each classification ID, estimates the cumulative damage amount. Then, the estimation process 19a of Embodiment 6, based on the proportion of each of the plurality of integrated values estimated for each classification ID in the cumulative damage amount, identifies the damage state that is the main cause of the cumulative damage amount received by the machine.

For example, assume that, in Fig. 10, the damage state of classification ID (1) occurred once, and the damage state of classification ID (3) occurred 1000 times. In this case, the integrated value of the individual damage amount of the portion A for the classification ID (1) is calculated as 1050×1=1050. The integrated value of the individual damage amount of the portion A for the classification ID (3) is calculated as 5×1000=5000. Then, the cumulative damage amount received by the portion A is calculated as 1050+5000=6050. Of the cumulative damage amount, 6050, received by the portion A, the proportion of the integrated value, 5000, of the individual damage amount for the classification ID (3) is greater than the integrated value, 1050, of the individual damage amount for the classification ID (1). Thus, the damage state constituting the main cause for the cumulative damage amount, 6050, received by the portion A is identified as being the damage state for the classification ID (3). This condition is visualized in Fig. 22 and Fig. 23.

Fig. 22 illustrates the integrated value of the individual damage amount received by the portion A for each classification ID. Fig. 23 illustrates the number of occurrences of the damage state corresponding to the individual damage amount received by the portion A for each classification ID. From Fig. 22, it is seen that the damage state constituting the main cause of the cumulative damage amount received by the portion A is the damage state of the classification ID (3). From Fig. 23, it is seen that the damage state of the classification ID (3) is a damage state of which the number of occurrences is large. Thus, it is seen that the cumulative damage amount received by the portion A can be reduced by reducing the number of occurrences of the damage state of the classification ID (3).

The estimation process 19a of Embodiment 6, as in Embodiment 5, can convert the cumulative damage amount into a cumulative damage level. Then, the estimation process 19a of Embodiment 6, as in Embodiment 5, can estimate the consumed amount of life or the remaining amount of life for each portion of the machine, and predict the life of each portion of the machine from a chronological change in the cumulative damage level. Further, in the examples of Fig. 22 and Fig. 23, if the life of the portion A will expire before the next maintenance timing, it is preferable not to let the damage state of the classification ID (3) occur too often. In this case, the arithmetic processing device 1b of Embodiment 6 may combine the straight lines 21f to 21h indicating the prediction results of the chronological changes 21a to 21c in the cumulative damage levels illustrated in Fig. 21, with the technique of the present embodiment, to generate a control command for not letting the damage state of the classification ID (3) occur too often, and transmit the control command to the control device controlling the operation of the machine. Further, in the examples of Fig. 22 and Fig. 23, because the classification ID (3) shows the damage state classified by a clustering technique, it may be difficult for the user to know what kind of state the damage state is. In this case, the arithmetic processing device 1b of Embodiment 6 may be provided with the function of performing the cutting-out process 14a and the reenactment process 14b of Embodiment 3, to generate an animation reenacting the damage state of the classification ID (3) and cause the display device to display the animation.

In the foregoing description, the estimation process 19a has been described as calculating the integrated value of the individual damage amount for each classification ID. However, as illustrated in Fig. 11, when the individual damage amount is tied to the ID identifying the classification ID pattern, the integrated value is calculated for each ID identifying the classification ID pattern. Further, while in Fig. 20, Fig. 22, and Fig. 23, the arithmetic processing device 1b uses bar graphs for visualization, other forms of visualization may be used, such as a circular graph.

Thus, in the state detecting device 100 of Embodiment 6, the integrated value of the individual damage amount is calculated for each classification ID, a plurality of the integrated values calculated for each classification ID are accumulated, and the cumulative damage amount received by the machine is estimated. In this way, in the state detecting device 100 of Embodiment 6, it is possible to identify the damage state constituting the main cause of the cumulative damage amount received by the machine, from the proportion of each of the plurality of the integrated values estimated for each classification ID in the cumulative damage amount. Accordingly, the state detecting device 100 of Embodiment 6 can, e.g., control the machine or take appropriate measures to prevent the occurrence of the damage state constituting the main cause, thereby making it possible to further sustain the health of the machine.

The function provided in the arithmetic processing device 1b of Embodiment 6 to perform the estimation process 19a and the display process 19b may be provided in the arithmetic processing device 1b of Embodiments 1 to 3. For example, the arithmetic processing device 1b of Embodiments 1 to 3 may be provided with the function for performing the estimation process 19a to calculate the integrated value of the individual damage amount for each classification ID based on the individual damage amount detected by the detection process 1j and the number of detections of the individual damage amount (i.e., the number of occurrences of the damage state), and to accumulate a plurality of the integrated values calculated for each classification ID to estimate the cumulative damage amount received by the machine. In this way, the arithmetic processing device 1b of Embodiments 1 to 3 can appropriately estimate the cumulative damage amount even if an unexpected damage state is the main cause thereof.

### [Embodiment 7]

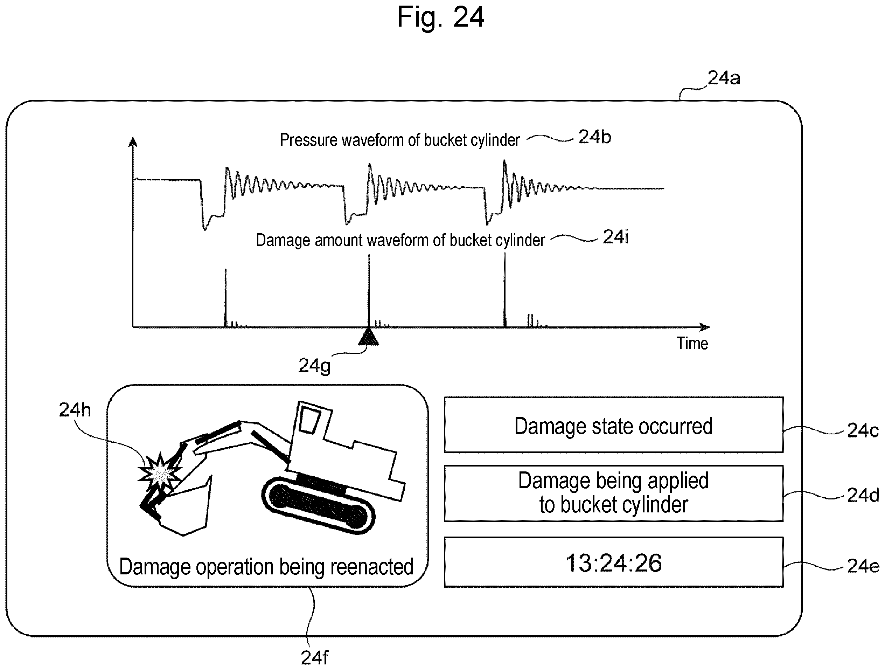

With reference to Fig. 24 to Fig. 26, the state detecting device 100 of Embodiment 7 will be described. Descriptions of components and operations in the state detecting device 100 of Embodiment 7 that are similar to those of the preceding embodiments will be omitted.

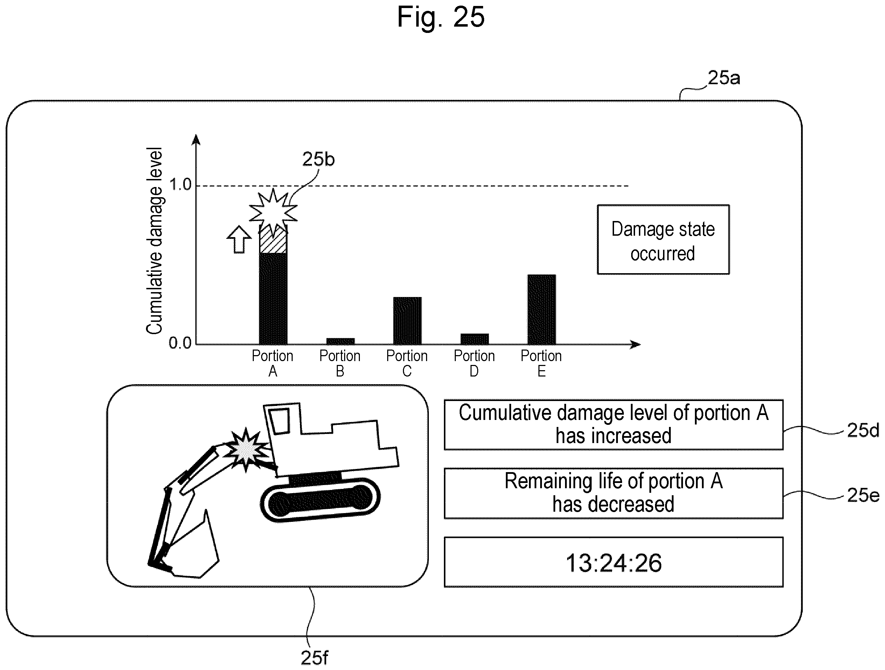

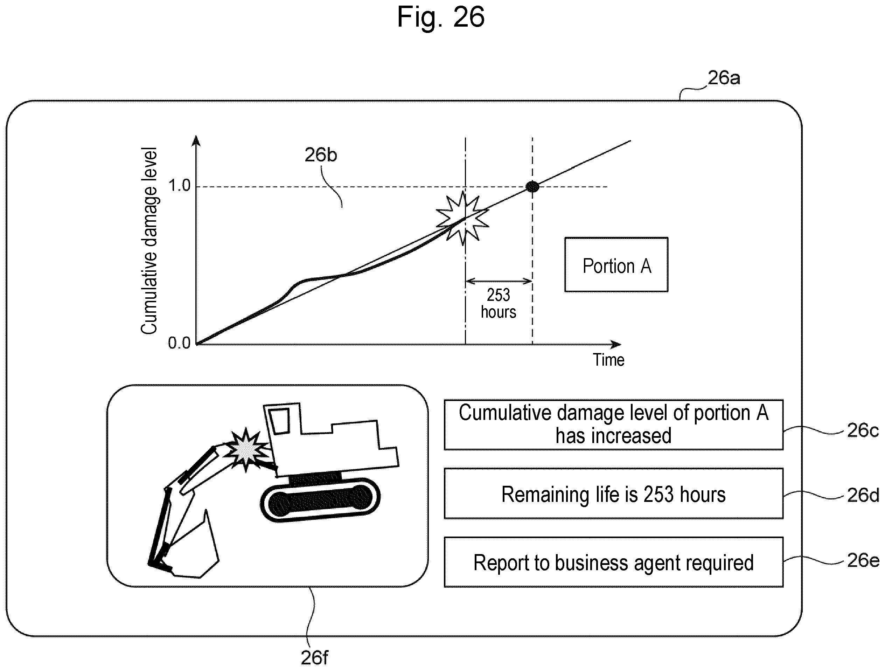

Fig. 24 illustrates an example (No. 1) of a display screen in the state detecting device 100 of Embodiment 7. Fig. 25 illustrates an example (No. 2) of the display screen. Fig. 26 illustrates an example (No. 3) of the display screen.

In Embodiment 7, visualization of various processing results described in Embodiments 1 to 6 will be described. The arithmetic processing device 1b of Embodiment 7 is provided with the function of performing the cutting-out process 14a and the reenactment process 14b, and is also provided with the function of performing the display process for causing the display device to display the animation (moving image) generated by the reenactment process 14b. The display process of Embodiment 7 causes the display device to display, together with the animation generated by the reenactment process 14b, at least one of the chronological change in the state information 1f collected in the predetermined interval in which the classification ID was cut out by the cutting-out process 14a; the chronological change in the individual damage amount in the predetermined interval; the cumulative damage amount; the chronological change in the cumulative damage amount; and the prediction result of the life of the machine.

Fig. 24 illustrates an example of the display screen when the machine received a damage affecting its life. In Fig. 24, 24a indicates the entire display screen. In Fig. 24, 24b is the pressure waveform for the bucket cylinder that received the damage, indicating chronological changes in the state information 1f. In Fig. 24, 24i is the waveform of the individual damage amount detected based on the pressure waveform 24b of the bucket cylinder, indicating chronological changes in the individual damage amount. In Fig. 24, 24f shows an animation that reenacts the operation (which may be hereafter referred to as "damage operation") that was being performed by the machine in a damage state during a predetermined interval.

If the machine is a construction machine such as a hydraulic excavator, the display device that displays the display screen 24a may be a display device installed in the cabin of the construction machine, or a display device installed in a monitoring room for the machine. The display screens 25a, 26a that will be described below are also displayed on a similar display device. The display process of Embodiment 7 may cause the display screen 24a to be displayed immediately in real time when the machine receives the damage, or may cause the display at a predetermined timing, such as at the end of the work of the machine. Alternatively, the display process of Embodiment 7 may cause the display screen 24a to be displayed upon the user operating a display button or the like. The display screens 25a, 26a are also similarly displayed in real time or at a predetermined timing, for example.

The display process of Embodiment 7 can cause the display device to display the display screen 24a when the machine receives damage. In this case, the display process of Embodiment 7 can cause displays of information indicating the occurrence of the damage state, such as "Damage state occurred" and information about the time the machine received the damage, as shown in 24c and 24e in Fig. 24b, thereby notifying the user. The display process of Embodiment 7 can display in text the portion of the machine that received the damage, as shown in 24d of Fig. 24, or cause a highlighted display in which the portion of the machine that received the damage is changed in color or shape and superimposed over the animation 24f, as shown in 24h of Fig. 24.

In this case, the highlighted display may be varied depending on the cumulative damage level. For example, when the cumulative damage level of the portion of the machine that received the damage is high, the highlighted display may be in "red"; if the cumulative damage level is not so high as "red" but requires caution, "yellow"; and "blue" if none of the above. Of course, the colors that are displayed are not limited to the three colors of red, yellow, and blue, which are merely examples.

The display process of Embodiment 7 is not limited to the highlighted display of the portion of the machine that received the damage, but may display the animation 24f displaying the entire machine with the major portions of the machine (such as, if the machine is an excavator, the boom, the arm, the bucket, and the travel body) color-coded. In this way, the display process of Embodiment 7 can let the user easily know the cumulative damage level of the entire machine with regard also to portions other than the highlighted portions, in terms of, i.e., which portion has a high cumulative damage level and which portion requires caution each time damage is received.

The display process of Embodiment 7, as shown in 24b and 24i of Fig. 24, can display the chronological changes in the state information 1f and the chronological changes in the individual damage amount to inform the user about what kind of, and how much, damage the machine received.

Fig. 25 illustrates an example of the display screen when the remaining amount of life of a certain portion of the machine is decreased. In Fig. 25, 25a indicates the entire display screen. In Fig. 25, 25b shows the cumulative damage level of each portion of the machine, i.e., the cumulative damage amount received by each portion of the machine. In Fig. 25, 25f shows an animation similar to 24f of Fig. 24.

The display process of Embodiment 7 can cause the display device to display the display screen 25a when the remaining amount of life of a certain portion of the machine is decreased. In this case, the display process of Embodiment 7, as shown in 25d and 25e of Fig. 25, can display in text information indicating that the cumulative damage level has increased and the remaining amount of life has decreased, or display such information by means of a bar graph or the like, as shown in 25b of Fig. 25. Further, the display process of Embodiment 7 can cause a highlighted display of the portion in which the remaining amount of life has decreased to be superimposed on the animation 25f. While a classification ID is tied to the damage state, a text-display character string as shown in 17a of Fig. 17 may not be associated. Even in such case, the display process of Embodiment 7 can reenact the damage state in which the remaining amount of life is decreased by means of the animation 25f, thereby notifying the user what state the machine was in, in an easily understandable manner.

Fig. 26 illustrates an example of the display screen for displaying the prediction result of the life of the machine. In Fig. 26, 26a indicates the entire display screen. In Fig. 26, 26b shows chronological changes in the cumulative damage level of a certain portion of the machine, and the prediction result of the life of the portion. That is, 26b in Fig. 26 shows the chronological change in the cumulative damage amount in the certain portion of the machine, and the prediction result of the life of the portion. In Fig. 26, 26f shows an animation similar to 25f of Fig. 25.

The display process of Embodiment 7, if the remaining amount of life of the certain portion of the machine is decreased, can predict the life thereof and cause the display device to display the display screen 26a. In this case, the display process of Embodiment 7 can display in text information indicating that the cumulative damage level is increased, and information indicating the remaining life, as shown in 26c and 26d of Fig. 26, thereby notifying the user. Further, the display process of Embodiment 7 can cause a text display of an action to be taken by the user, as shown in 26e of Fig. 26, thus notifying the user. If the action to be taken by the user is reporting to a business agent, the user can tap (or click by designating with a pointer) the display 26e showing "Report to business agent required", to cause a display of access information, such as the telephone number of the business agent, or cause a display of the procedure of a simple counter-measure.

Fig. 24 to Fig. 26 each illustrate an example of the display screen, where the presence or absence of the text display for notifying the user may be set as needed. For example, the display process of Embodiment 7 may initially only display the animation 24f to 26f. Then, when the user taps the highlighted display superimposed over the animation 24f to 26f, for example, more detailed information may be displayed. In this way, with the display process of Embodiment 7, a larger display area may be ensured for the animation 24f to 26f, allowing the user to accurately know which portion of the entire machine received the damage (with a higher cumulative damage level), and to also notify the user only about the information the user thinks necessary.

Thus, the state detecting device 100 of Embodiment 7 displays, together with the animation reenacting the damage state, at least one of the chronological change in the sensor/control information 1f collected in the predetermined interval including the damage interval; the chronological change in the individual damage amount; the cumulative damage amount; the chronological change in the cumulative damage amount; and the prediction result of the life of the machine. In this way, the state detecting device 100 of Embodiment 7 can visualize the damage state, and can also visualize and let the user know future changes in the state of the machine from various points of view, in an intuitive manner.

### [Others]

The present invention is not limited to the foregoing embodiments and may include various modifications. For example, the foregoing embodiments have been described to facilitate an understanding of the present invention, and are not limited to those provided with all of the components described. Some of the components of a certain embodiment may be substituted by components of another embodiment, or a component of the other embodiment may be incorporated into the components of the certain embodiment. Further, with respect to some of the components of each embodiment, addition, deletion, or substitution of another component may be made.

The components, functions, process sections, process means and the like described above may be partly or entirely designed on an integrated circuit, for example, for hardware implementation. Further, for the components, functions and the like described above, a program for implementing the respective functions may be interpreted and executed by a processor for software implementation. The information of a program for implementing the functions, tables, files, and the like may be placed in a recording device such as a memory, a hard disk, a solid-state drive (SSD), and the like, or in a recording medium such as an IC card, an SD card, a DVD, and the like.

The control lines and information lines that are illustrated are those considered necessary for description purposes, and not all of the control lines and information lines found in a product are necessarily illustrated. It may be considered that in reality, almost all of the elements are interconnected.

### Reference Signs List

- 1a: Collection device
- 1b: Arithmetic processing device
- 1i: Classification process (classification process section)
- 1j: Detection process (detection process section)
- 11: Tying process (tying process section)
- 1m: Determination process (first determination process section)
- 1n, 18b, 19b: Display process (display process section)
- 1p: Registration process (first registration process section)
- 1o: Classification ID database (first recording section)
- 1h: Classification model database (second recording section)
- 12a: Determination process (second determination process section)
- 12b: Generation process (generation process section)
- 12c: Registration process (second registration process section)
- 14a: Cutting-out process (cutting-out process section)
- 14b: Reenactment process (reenactment process section)
- 18a: Recognition process (recognition process section)
- 19a: Estimation process (estimation process section)
- 100: State detecting device

## Claims

1. A machine state detecting device comprising a collection device that collects, at a plurality of times, state information indicating a state of a machine that changes chronologically, and an arithmetic processing device that detects the state of the machine by processing a plurality of pieces of the state information collected at the plurality of times,
wherein the arithmetic processing device comprises:
a classification process section that identifies a plurality of feature amount vectors having a type of the state information as a feature amount by temporally dividing the plurality of pieces of the state information collected by the collection device, classifies the identified feature amount vectors into any of a plurality of prescribed sets, and, to the feature amount vectors that have been classified, provides a classification ID identifying the set to which each feature amount vector belongs;
a detection process section that detects a damage received by the machine based on the state information, collected by the collection device, indicating the state of the machine that chronologically changes; and
a tying process section that ties an interval in which the damage was detected by the detection process section to the classification ID provided in the interval by the classification process section.

2. The machine state detecting device according to claim 1, wherein the arithmetic processing device further comprises:
a first recording section in which the classification ID identifying a damage state that is the state of the machine in the interval in which the machine received damage is recorded in advance;
a first determination process section that determines whether, based on the classification ID recorded in the first recording section, the classification ID tied by the tying process section is an unknown classification ID; and
a first registration process section that registers the classification ID determined to be the unknown classification ID by the first determination process section in the first recording section.

3. The machine state detecting device according to claim 1, wherein the arithmetic processing device further comprises:
a second recording section in which the feature amount vector and the classification ID are associated with each other and recorded in advance;
a second determination process section that, based on the feature amount vector identified by the classification process section and the feature amount vector recorded in the second recording section, determines whether the classification ID that should be provided to the feature amount vector identified by the classification process section is recorded in the second recording section;
a generation process section that generates a new classification ID if the classification ID that should be provided to the feature amount vector identified by the classification process section is not recorded in the second recording section; and
a second registration process section that registers the classification ID generated by the generation process section and the feature amount vector to which the classification ID should be provided in the second recording section in association with each other.

4. The machine state detecting device according to claim 1, wherein the arithmetic processing device further comprises:
a cutting-out process section that cuts out the classification ID provided by the classification process section in a predetermined interval including the interval tied to the classification ID by the tying process section;
a reenactment process section that generates a moving image that reenacts the state of the machine in the predetermined interval, based on the classification ID cut out by the cutting-out process section; and
a display process section that causes a display device to display the moving image generated by the reenactment process section.

5. The machine state detecting device according to claim 1, wherein the arithmetic processing device further comprises an estimation process section that estimates a damage amount received by the machine,
wherein:
the detection process section, based on the state information collected in the interval, detects an individual damage amount that is a damage amount received by the machine in the interval;
the tying process section ties the individual damage amount detected by the detection process section to the classification ID provided by the classification process section in the interval in which the individual damage amount was detected; and
the estimation process section
calculates an integrated value of the individual damage amount for each classification ID based on the individual damage amount detected by the detection process section and a number of detections of the individual damage amount, and
accumulates a plurality of the integrated values calculated for each classification ID to estimate a cumulative damage amount received by the machine.

6. The machine state detecting device according to claim 5, wherein the arithmetic processing device further comprises:
a cutting-out process section that cuts out the classification ID provided by the classification process section in a predetermined interval including the interval tied to the classification ID by the tying process section;
a reenactment process section that generates a moving image that reenacts the state of the machine in the predetermined interval, based on the classification ID cut out by the cutting-out process section; and
a display process section that causes a display device to display the moving image generated by the reenactment process section,
the display process section causing the display device to display, together with the moving image, at least one of the chronological change in the state information collected in the predetermined interval, the chronological change in the individual damage amount in the predetermined interval, the cumulative damage amount, the chronological change in the cumulative damage amount, and a prediction result of a life of the machine.

7. A machine state detecting device comprising a collection device that collects, at a plurality of times, state information indicating a state of a machine that changes chronologically, and an arithmetic processing device that detects the state of the machine by processing a plurality of pieces of the state information collected at the plurality of times,
wherein the arithmetic processing device comprises:
a classification process section that temporally divides the plurality of pieces of the state information collected by the collection device to identify a plurality of feature amount vectors having a type of the state information as a feature amount, classifies the identified feature amount vectors into any of a plurality of prescribed sets, and, to the feature amount vectors that have been classified, provides a classification ID that identifies the set to which the feature amount vectors belong;
a first recording section in which the classification ID identifying a damage state that is the state of the machine in the interval in which the machine received damage is recorded in advance; and
a recognition process section that, based on the classification ID provided by the classification process section and the classification ID recorded in the first recording section, recognizes the damage state identified by the classification ID provided by the classification process section.

8. The machine state detecting device according to claim 7, wherein the arithmetic processing device further comprises an estimation process section that estimates a damage amount received by the machine, and, in the first recording section, an individual damage amount that is the damage amount received by the machine in the interval is tied to the classification ID and recorded in advance
wherein the estimation process section:
based on the classification ID identifying the damage state recognized by the recognition process section and the classification ID recorded in the first recording section, identifies the individual damage amount corresponding to the damage state recognized by the recognition process section;
based on the individual damage amount identified and a number of occurrences of the damage state corresponding to the individual damage amount, calculates an integrated value of the individual damage amount for each classification ID; and
accumulates a plurality of the integrated values calculated for each classification ID to estimate a cumulative damage amount received by the machine.

9. The machine state detecting device according to claim 8, wherein the arithmetic processing device further comprises:
a cutting-out process section that cuts out the classification ID provided by the classification process section in a predetermined interval including the interval corresponding to the damage state recognized by the recognition process section;
a reenactment process section that generates a moving image that reenacts the state of the machine in the predetermined interval, based on the classification ID cut out by the cutting-out process section; and
a display process section that causes a display device to display the moving image generated by the reenactment process section,
the display process section causing the display device to display, together with the moving image, at least one of the chronological change in the state information collected in the predetermined interval, the chronological change in the individual damage amount in the predetermined interval, the cumulative damage amount, the chronological change in the cumulative damage amount, and a prediction result of a life of the machine.
